# EUROPÄISCHE PATENTSCHRIFT

(11) **EP 0 746 504 B1**
(45) Veröffentlichungstag und Bekanntmachung des Hinweises auf die Patenterteilung: **20.05.1998**
(21) Anmeldenummer: 95909578.7
(22) Anmeldetag: 02.03.1995
(51) Int. Cl.: B65D 5/00, B65D 5/32, B31D 5/00, B31F 1/28, F16B 5/07, E04C 2/34

(54) **BAHNFÖRMIGES ELEMENT UND VERBINDUNGSVORRICHTUNG ZWISCHEN ZWEI BAHNFÖRMIGEN ELEMENTEN**
WEB-SHAPED MEMBER AND CONNECTION DEVICE BETWEEN TWO WEB-SHAPED MEMBERS
ELEMENT EN FORME DE BANDE ET DISPOSITIF DE LIAISON ENTRE DEUX ELEMENTS EN FORME DE BANDE

(30) Priorität: 03.03.1994 AT 454/94; 30.08.1994 AT 1664/94
(43) Veröffentlichungstag der Anmeldung: 11.12.1996
(73) Patentinhaber: Fröhlich, Wolfgang, 5202 Neumarkt am Wallersee (AT); Fröhlich-Rössler, Ursula, 5202 Neumarkt am Wallersee (AT)
(72) Erfinder: Fröhlich, Wolfgang, 5202 Neumarkt am Wallersee (AT); Fröhlich-Rössler, Ursula, 5202 Neumarkt am Wallersee (AT)
(74) Vertreter: Secklehner, Günter, Dr.
(86) Internationale Anmeldenummer: AT9500044
(87) Internationale Veröffentlichungsnummer: WO9523739

(56) Entgegenhaltungen:
- WO-A-89/08201
- DE-A- 2 836 617
- US-A- 3 058 869
- US-A- 4 070 515

## Beschreibung

Die Erfindung betrifft ein bahnförmiges Element wie es im Oberbegriff des Patentanspruches 1 beschrieben ist, sowie eine Verbindungsvorrichtung zwischen zwei bahnförmigen Elementen gemäß den Oberbegriffen der Patenansprüche 22 und 23 und ein Verfahren zur Herstellung eines derartigen bahnförmigen Elementes gemäß Oberbegriff des Patentanspruches 29.

Ein Einrastverbindungssystem mit Rastelementen ist durch die WO-A1-89/08201 und die daraus hervorgegangene EP-B1-0 364 521 bekannt geworden, welches zwei Verbindungseinrichtungen in Bandform aufweist, die jeweils auf einer sogenannten Verhakungsseite mit einer Mehrzahl von zumindest teilweise elastisch verformbaren Verhakungselementen versehen sind. Die einzelnen Verhakungselemente der Verbindungseinrichtung sind dabei jeweils durch vertikal zu einer Schichte angeordneten Rippen gebildet, die mit elastisch verformbaren Lippen versehen sind, welche beidseits der Rippen abstehen, um so zwischen den Lippen zweier aufeinander folgenden Rippen Verengungen von einer Abmessung geringer als die Spannweite der Lippen einer gegebenen Rippe auszubilden. Dabei sind die beiden Verbindungseinrichtungen jeweils einstückig ausgebildet und die Verbindung der einzelnen Verbindungseinrichtungen erfolgt nur durch eine elastische Verformung der über die Rippen vorstehenden elastischen Lippen.

Aus der US-4,070,515 ist ein bahnförmiges Element bekannt, welches aus einer oberen Lage und einer unteren Lage besteht, wobei die obere Lage aus einzelnen Segmenten gebildet ist, welche über einzelne Rippenteile in einer Bauhöhe voneinander distanziert angeordnet und gehalten sind. Dabei besteht die obere Lage aus mehreren streifenförmigen bzw. plattenförmigen Stegteilen, mit einem rechteckigem Querschnitt, die auf den Rippenteilen jeweils parallel zueinander verlaufend angeordnet sind und mit ihren Flachseiten mit einer gemeinsamen Ebene liegen. Quer zur Längsachse oder den Rippenteilen sind die Stege in gleicher Teilung angeordnet.

Weiters sind bereits bahnförmige Elemente beispielsweise für Leichtbaukerne bei Schiern bekannt - gemäß DD-A-235 048 - bei welchen eine Struktur in Art einer Wellpappe verwendet wird, bei der also eine obere und eine untere Lage über eine gewellte Zwischenlage verbunden sind und über die Längsrippen der Wellenlage die beiden Lagen in einer vorbestimmbaren Bauhöhe voneinander gehalten sind. Eine ähnliche Bauplatte aus Wellpappe ist beispielsweise auch der DE-A 28 36 617 zu entnehmen.

Der vorliegenden Erfindung liegt die Aufgabe zugrunde, bahnförmige Elemente zu schaffen, die in einfacher Weise lösbar miteinander verbunden werden können. Zusätzlich soll ein Verbindungssystem für derartige bahnförmige Elemente geschaffen werden, welches ein rasches Zusammenfügen zerstörungsfreies Lösen ermöglicht.

Diese Aufgabe der Erfindung wird durch die Merkmale im Kennzeichenteil des Patentanspruches 1 gelöst. Der überraschende Vorteil dieser Erfindung liegt darin, daß ein einfaches und kostengünstiges flächenhaftes bahnförmiges Element geschaffen wird, welches aus unterschiedlichen kostengünstigen Materialien, wie zum Beispiel Wellpappe, Kunststoff, elastischen Schaumstoffen oder ähnlichen Stoffen hergestellt werden kann und so ausgebildet ist, daß es in beliebiger Position jederzeit mit anderen bahnförmigen Elementen verbunden werden kann, beispielsweise flächenhafte oder räumliche Bauteile wie Anzeigetafeln im Werbebereich, beispielsweise in Schaufenstern, Verkaufsräumen, Messeständen oder als Werbedisplays oder als Konstruktionsteile zu verwenden. Darüberhinaus ist es in vorteilhafter Weise auch möglich, durch die Ausgestaltung der bahnförmigen Elemente rasch und einfach ohne zusätzliche Maßnahmen verschließbare Transportbehälter zu schaffen Der überraschende Effekt dieser Lösung liegt darin, daß die Verbindung zu derartigen flächenhaften Bauteilen bzw. Körpern wie Verpackungsbehältern mechanisch, das heißt ohne chemische Verbindung und wieder lösbar erfolgen kann. Durch diese erfindungsgemäße Ausbildung ist es in überraschender Weise nunmehr möglich, nicht nur ein rasches Verbinden von unterschiedlichen bahnförmigen Elementen zu erreichen, sondern auch ein bevorzugtes mehrmaliges zerstörungsfreies Lösen und Wiederverbinden. Damit ist eine Justierung oder unterschiedliche Lage der bahnförmigen Elemente einfach herstellbar und ist dadurch auch eine Mehrfachverwendung von bahnförmigen Elementen bzw. deren maßgenaue Einstellung nach der Verbindung derselben möglich. Darüberhinaus eröffnet diese Art der Verbindungstechnologie der Elemente aber auch eine Verschiebung derselben in ihrer eingerasteten Stellung zueinander, wodurch auch Verstellbewegungen zum Verschließen oder Öffnen und dgl. über diese Ausgestaltung der bahnförmigen Elemente möglich sind. Dadurch können auch standardmäßig herstellbare bahnförmige Elemente, wie beispielsweise Wellpappekarton, als Ausgangsprodukt für die erfindungsgemäßen bahnförmigen Elemente Verwendung finden.

Durch die Ausgestaltung nach Patentanspruch 2 kann eine erhebliche Versteifung erzielt werden, wodurch großflächige selbsttragende Bauteile geschaffen werden können.

Vorteilhafte Weiterbildungen ergeben sich auch aus der Ausführung gemäß dem Patentanspruch 3.

Von Vorteil ist aber auch eine Weiterbildung nach Patentanspruch 4, da dadurch z.B. auch Abfallmaterial eingespart werden kann, da die zur Verbindung benötigten Streifen in vorgefertigter Form direkt auf die Längsrippen aufgebracht werden können.

Es ist auch eine Ausführungsvariante nach Patentanspruch 5 möglich, wodurch bei Verwendung einstückiger Zuschnitte derartiger bahnförmiger Elemente und deren Zusammenfalten zu geschlossenen Behältern die Verbindung und Fixierung in der aufgerichteten Lage über die Stege erfolgen kann.

Weitere Vorteile ergeben sich aus den Patentansprüchen 6 bis 21.

Die erfindungsgemäße Verbindungsvorrichtung ist durch die Merkmale im unabhängigen Patentanspruch 22 gekennzeichnet. Durch die einfache Maßnahme, daß die Stege entsprechend vorragen, kann das Maß des Überstandes über die Längsrippen und die Wahl der entsprechenden Steifigkeit und Festigkeit des Kartons bzw. Papier oder der Folie, aus der diese Stege hergestellt sind, die Haltkraft bzw. die Tragkraft einer derartigen Verbindungsvorrichtung in überraschend einfacher Weise an unterschiedliche Bedingungen angepaßt werden.

Durch die Weiterbildung nach Patentanspruch 23 kann ein Verbinden von flächig aufeinander liegenden Elementen ohne gegenseitige Versetzung einfach ermöglicht werden.

Durch die elastische Verformbarkeit nach Patentanspruch 24 wird ein oftmaliges Verbinden und Lösen der Verbindungsvorrichtung ohne Zerstörung derselben ermöglicht.

Eine Verbindung von Elementen aus unterschiedlichen Materialien ist durch die Merkmale nach Patentanspruch 25 und/oder 26 erzielbar.

Durch die Ausgestaltung der Stege bzw. Stegteile nach Patentanspruch 27 kann die Haltekraft bzw. die Verriegelungskraft zwischen bahnförmigen Elementen zusätzlich verstärkt werden.

Das Verfahren zur Herstellung eines bahnförmigen Elementes ist durch die Maßnahmen im Patentanspruch 28 gekennzeichnet. Vorteilhaft ist bei dieser Lösung, daß nur jene Bereiche beispielsweise bei einer Wellkartonlage mit entsprechenden Stegen versehen werden müssen, die zur Verbindung der Bauteile benötigt werden. Damit kann in den übrigen Flächen eine geschlossene Oberfläche der Elemente beibehalten werden.

Es zeigen:
- Fig. 1: die erfindungsgemäße Verbindungsvorrichtung zwischen zwei Elementen in vereinfachter, perspektivischer Darstellung;
- Fig. 2: die beiden Elemente nach Fig. 1 mit der erfindungsgemäßen Verbindungsvorrichtung in Stirnansicht und voneinander getrennter Position;
- Fig. 3: die beiden Elemente mit der erfindungsgemäßen Verbindungsvorrichtung in Stirnansicht in zusammengefügter Stellung und vergrößertem Maßstab;
- Fig. 4: eine schematisch dargestellte Einrichtung zur Herstellung der erfindungsgemäßen Verbindungsvorrichtung an einem Element in perspektivisch vereinfachter Darstellung;
- Fig. 5: eine andere Ausführungsform der erfindungsgemäßen Verbindungsvorrichtung zwischen verschiedenartigen Teilen, in Stirnansicht;
- Fig. 6: eine weitere Ausbildung eines Teils der Verbindungsvorrichtung in perspektivisch, schematisch vereinfachter Darstellung;
- Fig. 7: die Verbindungsvorrichtung nach Fig. 6 in Draufsicht, mit ineinandergefügten Elementen;
- Fig. 8: die Verbindungsvorrichtung nach Fig. 6 und 7 in Draufsicht, mit in zueinander winkeliger Ausrichtung ineinandergefügten Elementen;
- Fig. 9: eine weitere Möglichkeit der Verbindung von Elementen mit der erfindungsgemäßen Verbindungsvorrichtung nach den Fig. 6 bis 8 in Draufsicht;
- Fig. 10: eine andere Ausführungsform der Verbindungsvorrichtung zwischen verschiedenartigen Teilen, in Stirnansicht;
- Fig. 11: ein Teil einer Verbindungsvorrichtung mit einem schematisch angedeuteten Biegewerkzeug, in Stirnansicht;
- Fig. 12: eine weitere Ausbildung einer erfindungsgemäßen Verbindungsvorrichtung in Stirnansicht und einer Mehrfachanordnung;
- Fig. 13: eine andere Fortbildung der Verbindungsvorrichtung mit keilförmig ausgebildeten Stegen, in Draufsicht und vereinfacht schematischer Darstellung;
- Fig. 14: einen Teil der Verbindungsvorrichtung an einem Element mit zusätzlich an den Stegen angeordneten Rastvorrichtungen, in perspektivisch vereinfachter schematischer Darstellung;
- Fig. 15: ein Teilbereich der Verbindungsvorrichtung mit einer anderen Ausbildung der Rastvorrichtung an den Stegen, in Draufsicht und getrennter Stellung der Elemente;
- Fig. 16: eine weitere Ausbildung der Verbindungsvorrichtung bei einem mehrlagigen Bauteil, in Stirnansicht;
- Fig. 17: eine Anwendungsmöglichkeit der Verbindungsvorrichtung nach Fig. 16, in Stirnansicht und schematisch vereinfachter Darstellung;
- Fig. 18: eine andere Ausführungsform des Elementes mit einander sich kreuzender Verbindungsvorrichtung an einem mehrlagigen Bauteil, in vereinfachter perspektivischer Darstellung;
- Fig. 19: ein Anwendungsbeispiel für die erfindungsgemäße Verbindungsvorrichtung, in vereinfachter perspektivischer Darstellung;
- Fig. 20: eine weitere Ausführungsform der Verbindungsvorrichtung bei einem Element in mehrlagiger Ausbildung, mit unterschiedlichen Konstruktionsmaßen zur Bildung eines Zylindersegmentes, in Stirnansicht;
- Fig. 21: ein Anwendungsbeispiel der Verbindungsvorrichtung nach Fig. 20, in perspektivisch vereinfachter Darstellung;
- Fig. 22: eine andere Anwendungsmöglichkeit der Verbindungsvorrichtung in Ansicht geschnitten, gemäß den Linien XXII-XXII in Fig. 23;
- Fig. 23: die Verbindungsvorrichtung in Stirnansicht, gemäß Pfeil XXIII in Fig. 22;
- Fig. 24: ein schematisch vereinfacht dargestelltes Handwerkzeug zur Herstellung der erfindungsgemäßen Verbindungsvorrichtung an einem Element in perspektivisch vereinfachter Darstellung;
- Fig. 25: eine schematisch und vereinfacht dargestellte Anlage zur Herstellung der erfindungsgemäßen Verbindungsvorrichtung in Stirnansicht;
- Fig. 26: eine Schneideinrichtung für die Anlage gemäß Fig. 25 in Seitenansicht und vergrößerter Darstellung;
- Fig. 27: eine andere Ausbildung eines Teiles der Verbindungsvorrichtung in perspektivisch, schematisch vereinfachter Darstellung;
- Fig. 28: eine weitere Möglichkeit der Ausführungsform einer erfindungsgemäßen Verbindungsvorrichtung in perspektivisch, vereinfachter schematischer Darstellung.

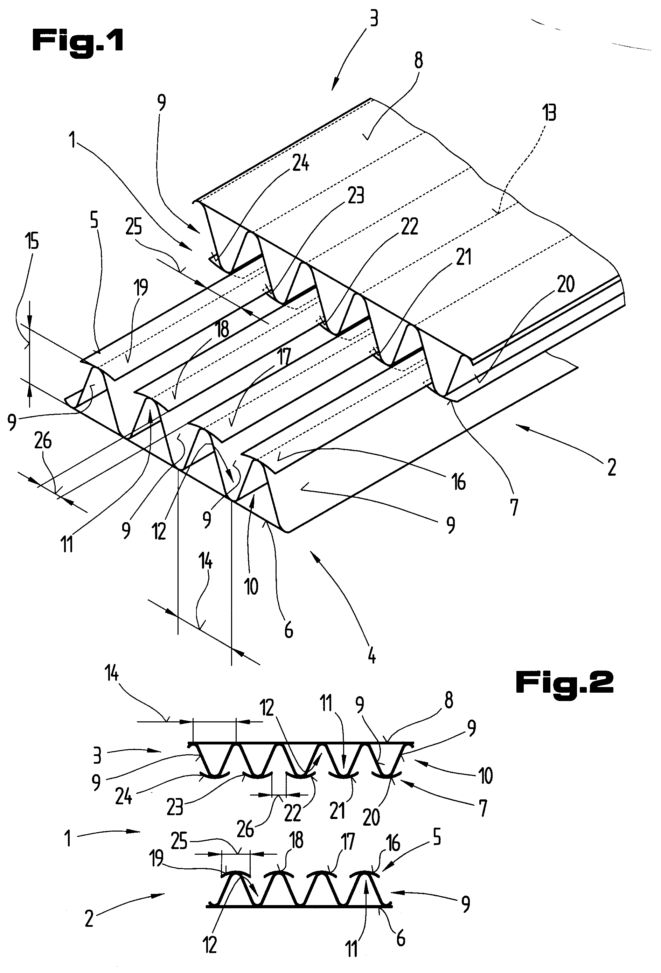

In den Fig. 1 bis 3 ist eine Verbindungsvorrichtung 1 zwischen bahnförmig bzw. flächenhaft ausgebildeten Elementen 2, 3, wie z.B. Wellpappe 4, gezeigt.

Das Element 2 besteht im vorliegenden Ausführungsbeispiel aus einer oberen Lage 5 sowie einer unteren Lage 6 und das Element 3 ebenfalls aus einer oberen Lage 7 und einer unteren Lage 8, wobei jeweils die oberen Lagen 5 bzw. 7 der Elemente 2, 3 einander zugewandt sind. Zwischen den oberen Lagen 5 bzw. 7 und unteren Lagen 6 bzw. 8 der Elemente 2, 3 ist ein Kern angeordnet, welcher bei diesem Ausführungsbeispiel aus einzelnen Längsrippen 9 gebildet ist, welche untereinander, z.B. durch Kreissegmente verbunden und zueinander geneigt, d.h. winkelig zu den Lagen 5, 7 ausgerichtet sind und eine Wellenschichte 10 bilden. Die Wellenschichte 10 ist mit den oberen Lagen 5 bzw. 7 und unteren Lagen 6 bzw. 8 mittels einer Kleberschichte verbunden. Erhebungen 11 bzw. Vertiefungen 12 der Wellenschichte 10 sind in den der oberen Lage 5 bzw. 7 und der unteren Lage 6 bzw. 8 zugewandten Bereichen der Kreissegmente in schematisch angedeuteten Verbindungsbereichen 13, die in Längserstreckung der Wellenschichte 10 verlaufen, kraft- und formschlüssig verbunden. Die einzelnen Lagen 5 bis 8 können ein- bzw. mehrlagig ausgebildet sein und bestehen bevorzugt aus Schichten von Pappe und/oder Papier und/oder Kunststoff aus Primär- oder Sekundärmaterialien bzw. Recyclingmaterialien. Selbstverständlich können die einzelnen Lagen 5 - 8 auch durch andere ebenflächige, insbesondere knickfeste oder steife Platten aus beliebigen Werkstoffen, wie Holz, Hartfaser, Blech oder durch Sandwichbauteile und dgl. gebildet sein.

Die Wellenschichte 10 weist quer zu deren Längserstreckung zwischen den Vertiefungen 12 bzw. Erhebungen 11 eine Teilung 14 auf, welche sich gleichmäßig über die Breitenausdehnung der Elemente 2, 3 erstreckt und die eine Bauhöhe 15 der Elemente 2, 3 festlegt. Je nach Wahl der Teilung 14 bzw. Bauhöhe 15 ist es auf einfache Art und Weise möglich, die Festigkeits- bzw. Steifigkeitseigenschaften der Elemente 2, 3 zu beeinflussen. Im vorliegenden Ausführungsbeispiel sind die Teilung 14 bzw. Bauhöhe 15 der einzelnen Elemente 2, 3 gleich gewählt. Es ist aber selbstverständlich auch möglich, die Teilung 14 bzw. Bauhöhe 15 unterschiedlich auszubilden, wodurch spezielle Effekte erreichbar sind, welche in den nachfolgenden Figuren noch detaillierter beschrieben werden. Gleiches gilt auch für die Herstellung der erfindungsgemäßen Verbindungsvorrichtung 1.

Die einander zugewandten oberen Lagen 5 bzw. 7 der Elemente 2, 3 sind in Richtung der Verbindungsbereiche 13 zwischen den Erhebungen 11 durchtrennt, wodurch Stege 16, 17, 18 und 19 am Element 2 bzw. Stege 20, 21, 22, 23 und 24 am Element 3 ausgebildet sind und Kupplungsteile bilden, welche eine Stegbreite 25 aufweisen, die im vorliegenden Ausführungsbeispiel kleiner der Teilung 14 ist. Dabei hintergreifen die Stege 16 bis 19 des Elementes 2 die Stege 20 bis 24 des Elementes 3 bzw. umgekehrt jeweils an der der jeweiligen unteren Lage 8 bzw. 6 zugewandten Seite. Diese Stege 16 bis 24 sind streifenförmig und mit einem rechteckigen Querschnitt ausgebildet, welche mit ihrer Längsachse zentrisch zum Verbindungsbereich 13 mit den Längsrippen angeordnet sind und diese quer zu ihrer Längserstreckung überragen, wobei die Stege 16 bis 19 bzw. 20 bis 24 in etwa in einer gemeinsamen Ebene liegen. Vorteilhaft, aber nicht zwingend, ist es, wenn die einzelnen Stege 16 bis 19 bzw. 20 bis 24 voneinander um eine Weite 26 distanziert sind, welche sich aus der Teilung 14 minus der Stegbreite 25 ergibt. Weiters können vorzugsweise einander zugewandte Endbereiche der Stege 16 bis 19 bzw. 20 bis 24 in Richtung der Vertiefungen 12 verformt sein, wodurch sie eine konvexe Ausbildung aufweisen.

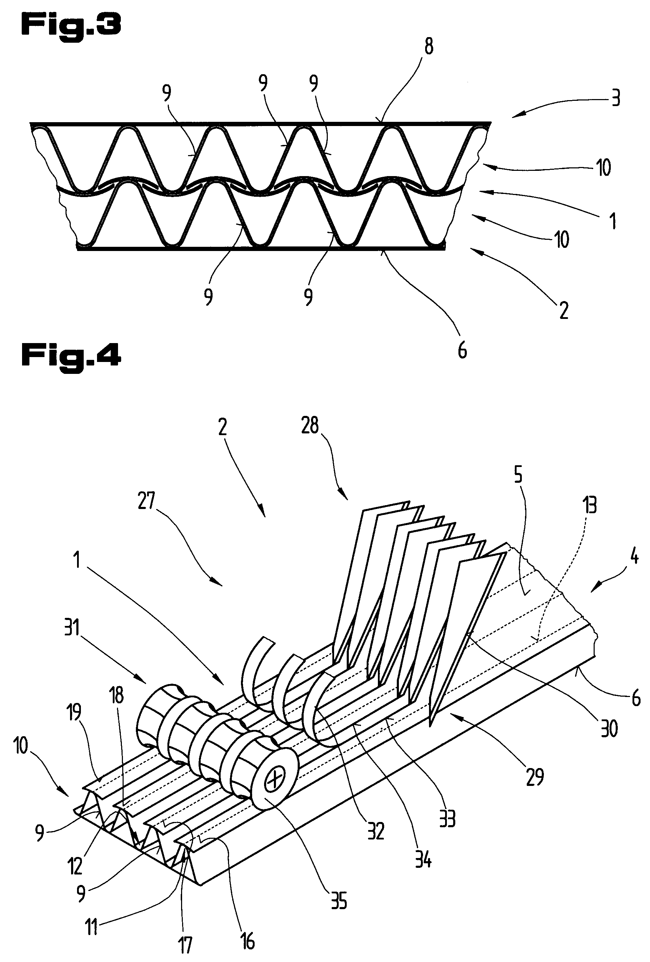

Wie nun besser aus der Fig. 2 zu ersehen ist, sind die beiden Elemente 2, 3 in ihrer um die halbe Teilung 14 gegeneinander versetzten Stellung vor dem Zusammenfügen derselben gezeigt. Dabei ist deutlich zu ersehen, daß die Stegbreite 25 der Stege 16 bis 19 bzw. 20 bis 24 größer der Weite 26 zwischen den Randbereichen bzw. Längsseitenkanten der einzelnen Stege ist. Die erfindungsgemäße Verbindungsvorrichtung 1 wird durch die Elemente 2, 3 zwischen den einzelnen Stegen 16 bis 19 bzw. 20 bis 24 ausgebildet, wie dies am besten aus Fig. 3 zu ersehen ist. Wesentlich dabei ist, daß bei diesem Ausführungsbeispiel die Elemente 2, 3 an ihren beiden zugewandten Oberflächen bzw. Lagen 5, 7 gleichartig, d.h., mit gleicher Teilung auszubilden und daß an jedem Element 2, 3 ein Teil der Verbindungsvorrichtung 1 angeordnet ist. Dabei ist es selbstverständlich möglich, jede Lage 5, 7 mit zueinander unterschiedlichen Stegbreiten 25 auszubilden.

Durch die gegenseitige konvexe Ausbildung der Stege 16 bis 19 bzw. 20 bis 24 ergibt sich die wellenförmig ausgebildete Verbindungsvorrichtung 1, welche dadurch gebildet ist, daß die einander zugewandten oberen Lagen 5 bzw. 7 und die daraus gebildeten Stege in deren Längserstreckung ineinander eingeschoben werden, wodurch sich auf einfache Art und Weise die flächenhafte Verbindungsvorrichtung 1 zwischen den einzelnen Elementen 2 bzw. 3 ergibt. Dieses Ineinanderfügen kann, wie dies in Fig. 3 schematisch durch Pfeile angedeutet ist, einerseits durch Zusammendrücken der Elemente 2, 3 in Richtung der oberen Lagen 5, 7 und andererseits auch durch ein versetztes Ineinanderschieben der Stege 16 bis 19 bzw. 20 bis 24 in Längsrichtung der Wellenschichte 10 erfolgen. Dadurch erreicht man eine schnappbare und in Längsrichtung verschiebbare Verrastung der Verbindungsvorrichtung 1, welche sich zusätzlich dadurch auszeichnet, daß sie einfach und ohne Beschädigung mehrfach getrennt und wieder zusammengefügt werden kann, da die Verbindung auf rein mechanischer Basis beruht und auf den Einsatz von chemischen Verbindungsmitteln gänzlich verzichtet werden kann.

Die Festigkeit bzw. Steifigkeit der Verbindungsvorrichtung 1 ist sowohl über die Wahl der Grammatur bzw. des Materialaufbaus bzw. Bindemittelgehaltes und dgl. der Lagen 5 bzw. 7 als auch über die Abmaße der Stegbreiten 25 in Bezug auf die Weiten 26 zwischen den einzelnen Stegen 16 bis 19 bzw. 20 bis 24 auf einfache Art und Weise zu variieren.

Als Material für die einzelnen Elemente 2, 3 können die verschiedensten Werkstoffe, wie z.B. Papier, Pappe, Karton, Kunststoffe und Recyclingstoffe daraus, mit den unterschiedlichsten Materialstärken, Grammaturen bzw. Rezepturen verwendet werden. Es ist selbstverständlich auch möglich, diese verschiedenen Werkstoffe bzw. Materialien beliebig untereinander zu kombinieren. Für die Herstellung der Elemente 2, 3 bzw. der Wellpappe 4 können alle aus dem Stand der Technik dafür bekannten Verfahren bzw. Einrichtungen verwendet werden.

So ist es z.B. möglich, eine der Lagen 5 bis 8 aus einer Folie aus Kunststoff mit einer Wellenschichte 10 aus Pappe bzw. Karton zu kombinieren bzw. umgekehrt.

In der Fig. 4 ist eine schematisch angedeutete Bearbeitungseinrichtung 27, bestehend aus einer Trennvorrichtung 28, welche im vorliegenden Ausführungsbeispiel als Schneideinrichtung 29 mit schematisch angedeuteten Messern 30 sowie einem Biegewerkzeug 31 gebildet ist. Anstelle der Messer 30 der Trennvorrichtung 28 ist es selbstverständlich auch möglich, diese durch Klingen, rotierende Scheiben, Laser etc. auszubilden. Dabei kann entweder das Werkstück stillstehen und die Bearbeitungseinrichtung 27 bewegt werden oder die Bearbeitungseinrichtung 27 stillstehen und das Werkstück zur Bearbeitung vorbeibewegt werden.

Um einen Teil der Verbindungsvorrichtung 1 am Element 2 herzustellen, ist es vorteilhaft, mit der Trennvorrichtung 28 die obere Lage 5 des Elementes 2 zwischen den Erhebungen 11 der Wellenschichte 10 entsprechend aufzutrennen, wodurch ein Streifen 32 aus der oberen Lage 5 herausgetrennt wird, welcher die zuvor beschriebene Weite 26 aufweist. Gleiches gilt selbstverständlich auch für die obere Lage 7 des Elementes 3.

Bei der Auftrennung der oberen Lage 5 bzw. 7 ist darauf zu achten, daß die Ausrichtung von Trennlinien 33, 34 exakt in Längsrichtung der Wellenschichte 10 und parallel zur Verbindungsbereich 13 verläuft, da ansonst ein gesichertes Ineinanderschieben bzw. Verbinden von Elementen 2, 3 nicht möglich ist bzw. beim Trennvorgang einzelne Wellenschichten 10, im besonderen die Erhebungen 11, durchtrennt werden, wodurch es zu einem Ablösen der einzelnen Stege kommen kann.

Vorzugsweise kann anschließend an die Trennvorrichtung 28 ausgehend von der rechteckigen Querschnittsform der einzelnen Stege die konvexe Verformung der Stege 16 bis 19 mit dem Biegewerkzeug 31, welches in Form von konkav ausgeführten Druckwalzen 35 gebildet ist, erfolgen, und daß dadurch Abschnitte eines Kreisringes entstehen. Durch das Biegewerkzeug 31 werden die einander zugewandten Randbereiche der Stege 16 bis 19 bzw. 20 bis 24 in Richtung der Vertiefungen 12 verformt. Somit ist ein Teil der Verbindungsvorrichtung 1 an einem Element 2 bzw. 3 hergestellt. Diese Verformung kann aber auch durch Temperatur und/oder Druck und/oder Feuchtigkeit bleibend erfolgen.

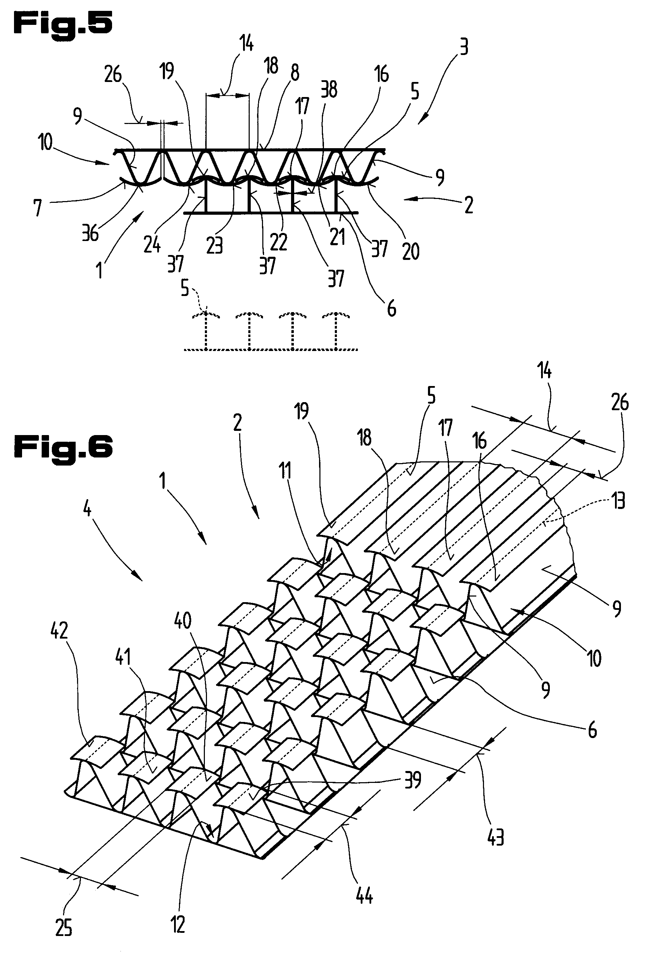

In der Fig. 5 ist eine weitere Ausführungsform der Verbindungsvorrichtung 1 zwischen den Elementen 2, 3 gezeigt, wobei für gleiche Teile in der Beschreibung gleiche Bezugszeichen verwendet worden sind.

Das Element 3 besteht, wie bereits zuvor beschrieben, aus der oberen bzw. unteren Lage 7, 8 sowie dem dazwischen durch die Wellenschichte 10 gebildeten Kern. Im linken Teil dieser Darstellung ist zwischen dem Steg 24 sowie einem weiteren Steg 36 dargestellt, daß die Auftrennung der oberen Lage 7 lediglich entlang einer Geraden, welche parallel zwischen den Verbindungsbereichen 13 ausgerichtet ist, erfolgt. Somit sind einander zugewandte Randbereiche der einzelnen Stege 20 bis 24, 36 lediglich bedingt durch die konvexe Verformung dieser um die Weite 26 voneiander distanziert, welche wiederum ausreicht, um Längsrippen 37, welche den Kern des Elementes 2 ausbilden und mit der unteren Lage 6 verbunden sind, zwischen sich aufzunehmen. Die Längsrippen 37 weisen eine Dicke 38 quer zu deren Längserstreckung auf, wodurch lediglich ein Auftrennen der oberen Lage 7 des Elementes 3 erforderlich ist und somit eine hohe Festigkeit der Verbindungsvorrichtung 1 gewährleistet ist.

Es ist aber selbstverständlich auch möglich, die Weite 26 zwischen den einander zugewandten Bereichen der einzelnen Stege 20 bis 24, 36 zu vergrößern bzw. breiter auszuführen, wodurch es auf einfache Art und Weise möglich ist, die Festigkeit der Verbindungsvorrichtung 1 an die gewünschten Einsatzbedingungen einfach anpassen zu können.

Bei diesem Ausführungsbeispiel ist weiters eine mögliche Kombination verschiedener Elemente 2, 3 gezeigt, wobei das Element 3 aus einer Kartonschichte, wie z.B. einlagiger Wellpappe 4 und das Element 2 aus einer Werkstoffbahn aus Kunststoff, welche z.B. durch Extrudieren hergestellt worden ist, gebildet sind. Es ist lediglich darauf zu achten, daß an jedem einzelnen Element 2, 3 ein entsprechender Teil der Verbindungsvorrichtung 1 vorhanden ist, welche in Bezug auf die Teilung 14 zueinander entsprechend ausgerichtet sind.

In den Fig. 6 bis 9 sind weitere Ausführungsmöglichkeiten der Verbindungsvorrichtung 1 gezeigt, wobei wiederum für gleiche Teile gleiche Bezugszeichen verwendet werden.

Das Element 2 besteht im vorliegenden Ausführungsbeispiel aus einer einlagigen Wellpappe 4, welche aus der oberen bzw. unteren Lage 5, 6 und dem dazwischen angeordneten Kern gebildet ist. Die obere Lage 5 ist wiederum in Stege 16 bis 19 aufgeteilt, welche entlang von schematisch eingetragenen Verbindungsbereichen 13 an den einzelnen Erhebungen 11 mit der Wellenschichte 10 des Kerns verbunden sind.

Weiters ist im vorderen Bereich des Elementes 2 gezeigt, daß die einzelnen Stege 16 bis 19 zusätzlich quer zu ihrer Längserstreckung unterbrochen ausgeführt sind und auch die Wellenschichte 10 durchgängig bis zur unteren Lage 6 entfernt bzw. weggelassen ist, wodurch sich Querkanäle ausbilden. Dadurch bilden sich einzelne Stegteile 39 bis 42 aus den einzelnen Stegen, welche voneinander in Längsrichtung der Stege gesehen um eine Distanz 43 voneinander entfernt sind und eine Länge 44 aufweisen. Bedingt durch die Länge 44 und Stegbreite 25 der einzelnen Stegteile 39 bis 42 und die Weite 26 bzw. Distanz 43 ist wiederum die Festigkeit der Verbindungsvorrichtung 1 auf einfache Art und Weise zu beeinflußen.

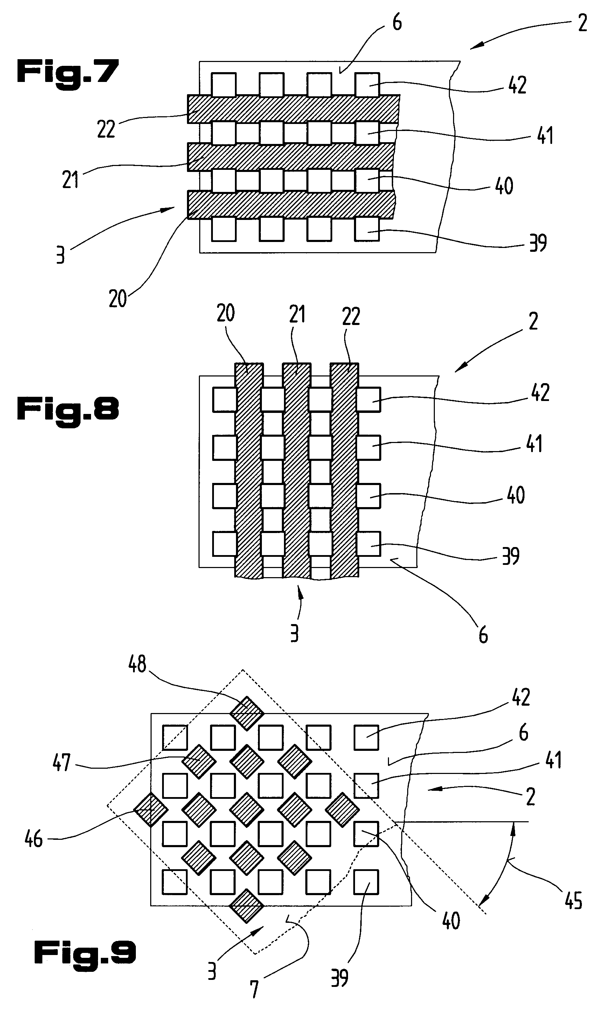

Dadurch entsteht weiters die Möglichkeit, wie dies in den Fig. 7 und 8 schematisch angedeutet ist, das Element 3 mit den durchgehenden Stegen 20 bis 22 sowohl in Längserstreckung des Elementes 2 als auch 90° dazu, also in Querrichtung zu dessen Längserstreckung mit diesem zu verbinden. Dabei ist auf eine entsprechende Ausbildung der Stegbreite 25, der Länge 44 sowie der Distanz 43 eines Teils der Verbindungsvorrichtung 1 in Bezug auf die Stegbreite 25 der Stege 20 bis 22 des Elementes 3 Bedacht zu nehmen.

Es ist aber auch ebenso möglich, die einzelnen Stegteile 39 bis 42 und die darunter verbleibende Wellenschichte 10 durch noppenartige Vorsprünge, welche in ihren Querschnittsabmessungen den einzelnen Feldern entsprechen, zu ersetzen und mit der unteren Lage 6 zu verbinden bzw. einstückig mit dieser auszubilden. Als Werkstoffe können z.B. verschiedene Kunststoffe, gepreßtes Papiermaché, Holz etc. verwendet werden.

In der Fig. 9 ist eine weitere vereinfachte Möglichkeit dargestellt, bei welcher gezeigt ist, wenn die Verbindungsvorrichtung 1 an den Elementen 2 und 3 entsprechend ausgebildet ist, die Möglichkeit besteht, diese auch unter einem Winkel 45 im vorliegenden Fall von 45°, zueinander anzuordnen, wobei wiederum die einzelnen Stegteile 39 bis 42 des Elementes 2 mit Stegteile 46 bis 48 des Elementes 3 in Eingriff stehen. Um einen Eingriff der einzelnen Stegteilen 39 bis 42 bzw. 46 bis 48 zu gewährleisten, ist es notwendig, die einzelnen Stegkeile des Elementes 3 versetzt zueinander anzuordnen, um dies einwandfrei zu gewährleisten.

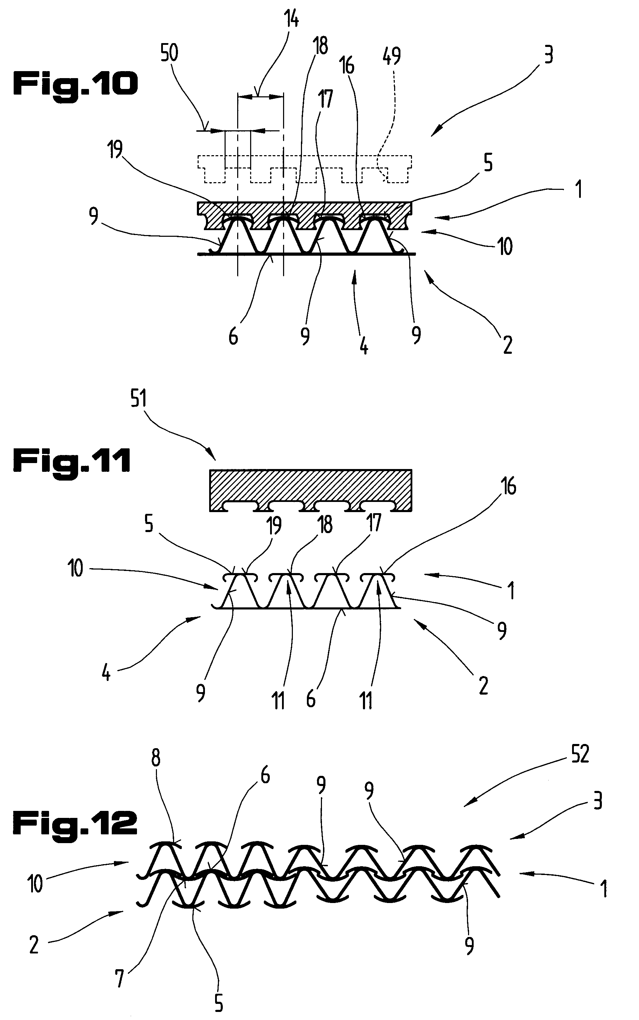

In Fig. 10 ist eine weitere Ausführungsform der Verbindungsvorrichtung 1 zwischen dem Element 2, welches aus einer einlagigen Wellpappe 4 gebildet ist und einem weiteren Elemente 3 gezeigt. Dabei ist das Element 3 vor dem Zusammenfügen der Verbindungsvorrichtung 1 in seinem unverformten Zustand in strichlierten Linien dargestellt. Das Element 3 besteht aus einem elastischen Werkstoff, wie z.B. Kunststoff, Schaumstoff oder Styropor, in welchem in der entsprechenden Teilung 14 zum Element 2 entsprechende sich in Längsrichtung erstreckende Ausnehmungen 49 an der der oberen Lage 5 des Elementes 2 zugeordneten Seite angeordnet sind und eine Breite 50 aufweisen, welche gleich oder kleiner der Stegbreite 25 der Stege 16 bis 19 ist. Dadurch ist gewährleistet, wie dies in der zusammengefügten Stellung der Verbindungsvorrichtung 1 gezeigt ist, daß die einzelnen Stege 16 bis 19 das Material des Elementes 3 elastisch verformen, wodurch wiederum eine gesicherte Verbindung zwischen den Elementen 2, 3 herstellbar ist. Die Festigkeit der Verbindungsvorrichtung 1 läßt sich durch die Wahl der Stegbreite 25 in Bezug auf die Breite 50 der Ausnehmung 49 sowie durch die Wahl und Ausgestaltung des elastischen Werkstoffes auf einfache Art und Weise steuern. Es ist aber auch möglich, das Element 3 aus einem wenig elastischem Material bzw. einem Material mit einer rauhen Oberfläche, z.B. Holz, Spanplatten, Papiermachee oder dgl. zu bilden und die elastische Verformung der einzelnen Stege 16 bis 19 für den Aufbau der Haltekraft der Verbindungsvorrichtung 1 zu verwenden.

In der Fig. 11 ist eine weitere mögliche Ausführungsform eines Teiles der Verbindungsvorrichtung 1 an einem Element 2 schematisch dargestellt.

Dabei ist die obere Lage 5 entlang von Trennlinien, welche parallel zu den Erhebungen 11 der Wellenschichte 10 verlaufen, aufgetrennt und die somit entstehenden einzlenen Stege 16 bis 19 werden mittels einer schematisch angedeuteten Biegevorrichtung 51 an ihren Endbereichen in Richtung der Wellenschichte 10 nach innen verformt. Dadurch ergibt sich an den Randbereichen ein gerundeter Übergang, welcher das Zusammenfügen bzw. spätere Trennen der Verbindungsvorrichtung 1 auf einfache Art und Weise ermöglicht bzw. ein zu starkes Eindringen der Stege in das Gegenmaterial verhindert.

In der Fig. 12 ist eine weitere Ausführungsvariante der Verbindungsvorrichtung 1 zwischen den Elementen 2 und 3 gezeigt, wobei wiederum für gleiche Teile gleiche Bezugszeichen verwendet worden sind.

Bei dieser Ausführung der Verbindungsvorrichtung 1 der Elemente 2, 3 sind sowohl die oberen Lagen 5, 7 als auch die unteren Lagen 6, 8 entsprechend aufgetrennt bzw. der Streifen 32 entfernt, wodurch sich auf beiden Seiten der einlagigen Wellpappe 4 der Elemente 2, 3 ein Teil der Verbindungsvorrichtung 1 ausbildet. Dadurch ist es nunmehr möglich, mehrere Elemente 2, 3 miteinander zu verbinden, wodurch ein mehrlagiger Baukörper 52 ausgebildet werden kann. Dies erfolgt z. B. dadurch, daß das Element 3 in seiner Längenausdehnung quer zur Wellenschichte 10 zusammengeschoben und das Element 2 entsprechend in seiner Längenausdehnung gestreckt wird, wodurch ein einfaches Ineinanderfügen möglich ist. Es ist auch möglich, daß beim Element 2 bzw. 3 die obere Lage 5 bzw. 8 deren Stege gänzlich entfernt oder weggelassen ist bzw. sind und somit an den beiden Außenseiten eine gewellte Oberfläche ausgebildet ist.

Des weiteren ist es aber auch durch diese Ausführungsform, bei welcher sowohl die obere als auch die untere Lage von zwei Elementen 2, 3 mit Stegen verbunden sind, möglich, einen mehrlagigen Verbundbauteil herzustellen, sodaß in einfacher Weise bahnförmige Elemente geschaffen werden können, die unterschiedliche Belastungen aufnehmen können.

Dies kann weiters z.B. für Verpackungszwecke von Vorteil sein, da beispielsweise an gewissen Stellen eine entsprechende Verstärkung der Verpackungsschichte vorgesehen werden kann, welche mit den durchlaufenden Elementen 2, 3 ebenfalls eine feste Verbindung aufweisen. Es ist aber unter Umständen auch möglich, die Teilung bereichsweise zu verändern, um unterschiedliche Festigkeiten in verschiedenen Bereichen zu erzielen.

Durch die Verbindung von mehreren Elementen 2, 3, bei denen die Längsrippen in unterschiedlicher Teilung zueinander angeordnet sind, ist es möglich, in Abhängigkeit vom Verhältnis zwischen den Teilungen mehrlagige gekrümmte bahnförmige Elemente herzustellen. Die Krümmung kann durch eine Vergrößerung der Differenz zwischen den Teilungen der Längsrippen der zu verbindenden bahnförmigen Elemente 2, 3 verkleinert werden. D.h., daß bei größerer Differenz zwischen der Teilung der Längsrippen in den beiden Elementen 2, 3 eine stärkere Krümmung des daraus hergestellten Verbundbauteils möglich ist.

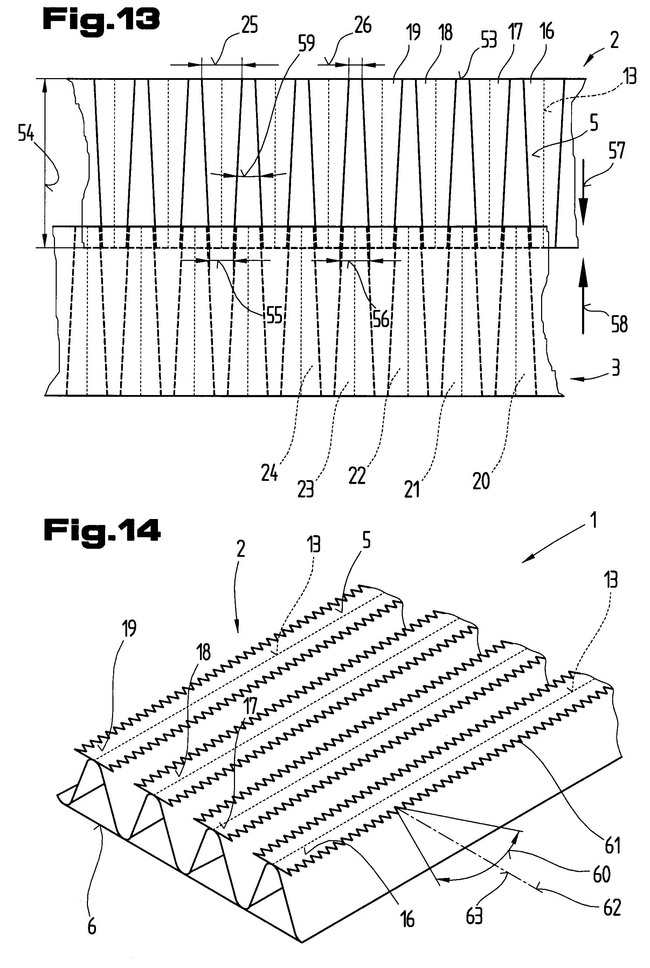

In der Fig. 13 ist schematisch eine konische pfeilförmige Ausbildung der einzelnen Stege 16 bis 19 der oberen Lage 5 des Elementes 2 bzw. der Stege 20 bis 24 der oberen Lage 7 des Elementes 3 dargestellt. Dabei nimmt die Stegbreite 25 von einem Endbereich 53 über eine Länge 54 des Elementes 2 auf eine Stegbreite 55 ab, wodurch sich die Weite 26 zwischen den einzelnen Stegen 16 bis 19 über die Länge 54 auf eine Weite 56 vergrößert. Ein Teil der Verbindungsvorrichtung 1 ist beim Element 3 entsprechend gegenläufig ausgebildet, wodurch sich bei einem Ineinanderfügen der beiden Elemente 2, 3 entsprechend den Pfeilen 57, 58 die Stege 16 bis 19 des Elementes 2 mit den Stegen 20 bis 24 des Elementes 3 gegenseitig verkeilen.

Durch die Wahl der Stegbreiten 25 bzw. 55 und der daraus resultierenden Weiten 26 bzw. 56 zwischen den einzelnen Stegen läßt sich ein Winkel 59, welcher aus als Konuswinkel bezeichnet werden kann, einfach auf die entsprechende Trennkraft zwischen den einzelnen Elementen 2, 3 abstimmen. Je flacher der Winkel 59 gewählt wird, desto weiter lassen sich die beiden Elemente 2, 3 ineinander schieben und es kommt auch gleichzeitig zu einer sogenannten Selbsthemmung.

In der Fig. 14 ist eine weitere Ausbildung der Randbereiche der einzelnen Stege 16 bis 19, welche ebenflächig, also vollständig parallel zur unteren Lage 6, ausgebildet sind, dargestellt. Der Aufbau der Verbindungsvorrichtung 1 entspricht im wesentlichen den Fig. 1 bis 4, wobei wiederum für gleiche Bauteile gleiche Bezugszeichen verwendet worden sind. Ein Flankenwinkel 60 von Rastnasen 61, welche beidseits in Längsrichtung der Stege 16 bis 19 angeordnet sind, ist in etwa symmetrisch zu einer Normalen 62 zum Verbindungsbereich 13 ausgerichtet. Eine Symmetrieachse 63 des Flankenwinkels 60 deckt sich im vorliegenden Ausführungsbeispiel mit der Normalen 62. Dadurch ergibt sich bei der Verbindung der einzelnen Elemente 2, 3 in Längsrichtung gesehen ein in etwa gleicher Widerstand in Bezug auf das Zusammenfügen bzw. Auseinanderziehen der Verbindungsvorrichtung 1.

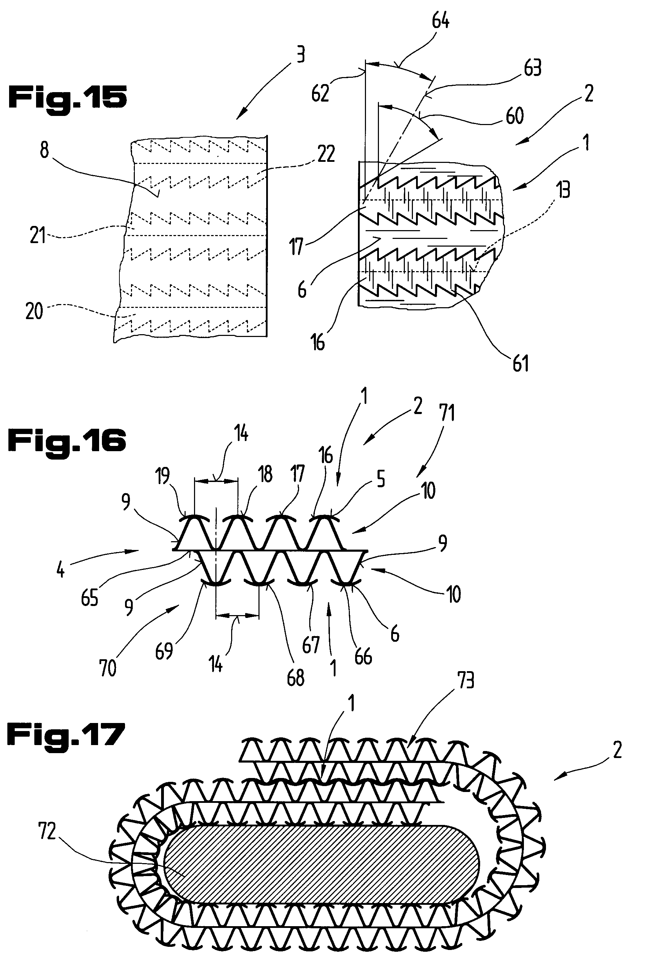

In der Fig. 15 hingegen ist gezeigt, daß die Symmetrieachse 63 des Flankenwinkels 60 der Rastnasen 61 in Bezug auf die Normale 62 auf den Verbindungsbereich 13 unter einem Winkel 64 geneigt zu dieser verläuft. Dadurch, daß die in dieser Figur dargestellten Stege 16, 17 bzw. 20 bis 22 der Elemente 2, 3 gleichartig ausgebildet sind, ergibt sich bei einem entsprechenden Ineinanderfügen der Verbindungsvorrichtung 1 jener Effekt, daß sich die Elemente 2, 3 nur in einer Richtung zusammenschieben lassen und bedingt durch die Ausbildung der einzelnen Rastnasen 61 sich diese gegenseitig vor einem Auseinanderziehen selbsttätig sperren. Dadurch ist ein Verschlußsystem bzw. eine Verbindungsvorrichtung 1 geschaffen, welche sich einfach in einer Richtung zusammenschieben läßt und sich selbsttätig in der Gegenrichtung sperrt, wodurch ein nahezu stufenloses Festziehen bzw. Gegeneinanderschieben der Elemente 2, 3 möglich ist.

In der Fig. 16 ist eine andere Ausführungsform der Verbindungsvorrichtung 1 für ein Element 2 gezeigt, welches im vorliegenden Ausführungsbeispiel aus einer mehrlagigen Wellpappe 4 gebildet ist.

Beidseits einer Zwischenlage 65 des Elementes 2 ist wiederum an Auflageflächen je ein eigener Kern, bestehend aus der Wellenschichte 10 angeordnet und von der oberen bzw. unteren Lage 5, 6 begrenzt, wobei die Erhebungen 11 bzw. Vertiefungen 12 der jeweiligen Wellenschichte 10 um eine halbe Teilung 14 zueinander versetzt angeordnet sind. Es ist aber auch möglich, die Teilung 14 der einzelnen Wellenschichten 10 zueinander unterschiedlich auszuführen. Diese beiden Lagen 5, 6 sind, wie bereits zuvor beschrieben, entsprechend aufgetrennt, wodurch sich Stege 66, 67, 68 und 69 an einer Unterseite 70 und Stege 16 bis 19 an einer Oberseite 71 des Elementes 2 ausbilden. Dadurch bildet sich sowohl an der Unterseite 70 bzw. Oberseite 71 des Elementes 2 ein Teil der Verbindungsvorrichtung 1 aus, wodurch es auf einfache Art und Weise möglich ist, beidseits des Elementes 2 weitere Elemente 3 mit diesen über die Verbindungsvorrichtung 1 zu verbinden.

Ein entsprechendes Anwendungsbeispiel für die beidseitige Anordnung der Verbindungsvorrichtung 1 am Element 2 ist in Fig. 17 schematisch angedeutet. Dabei ist ein Teil 72, welcher z.B. für Transportzwecke entsprechend verpackt und geschützt werden soll, von dem in Fig. 16 beschriebenen Element 2 umhüllt und in einem Verbindungsbereich 73 desselben überlappend angeordnet, wodurch es auf einfache Art und Weise möglich ist, die beiden Enden des Elementes 2 mittels der beidseits angeordneten Verbindungsvorrichtung 1 miteinander zu verbinden. Dadurch kann auf jegliche Art von zusätzlichen Verbindungshilfsmitteln verzichtet werden, wodurch einerseits ein rasches Verpacken möglich ist und andererseits zusätzliche Teile eingespart werden, wodurch es zu einer Vereinfachung des Verpackungsvorganges und somit zu einer Kostenreduktion kommt.

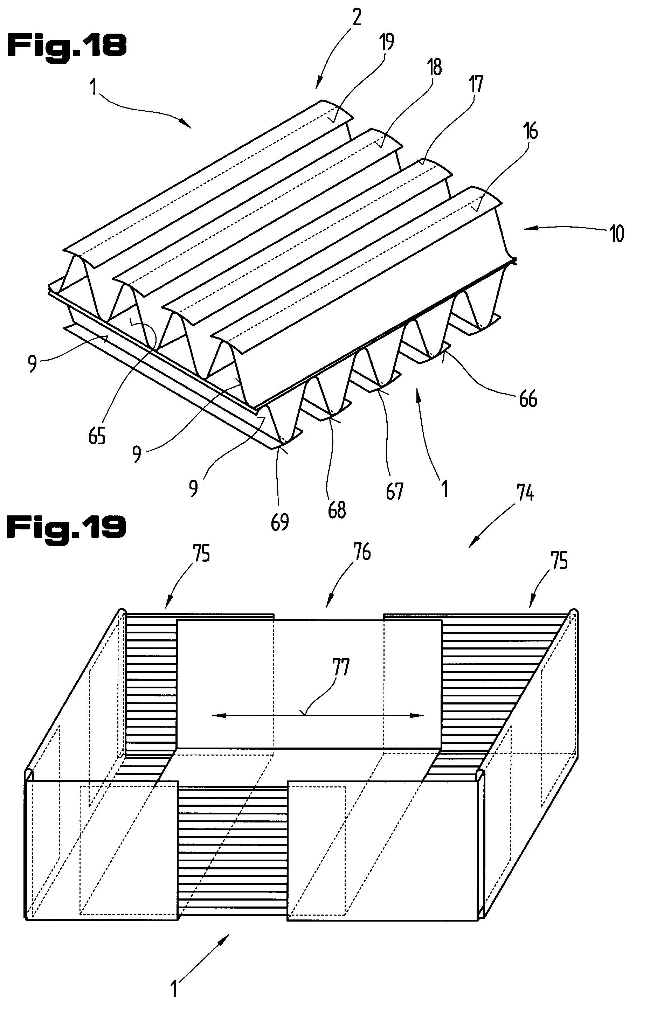

In der Fig. 18 ist ein Teil des mehrlagig ausgeführten Elementes 2 gezeigt, wobei wiederum beidseits dieses ein Teil der Verbindungsvorrichtung 1 angeordnet ist. Das Element 2 besteht wiederum aus der Zwischenlage 65 und den beidseits davon angeordneten Kernen mit ihren Wellenschichten 10. Im Gegensatz zu der Ausführung in der Fig. 16 ist die Ausrichtung der einzelnen Wellenschichten 10 mit ihren daran angeordneten Stegen 16 bis 19 bzw. 66 bis 69 quer zueinander, also in einem Winkel von in etwa 90° ausgeführt. Dadurch ist es auf einfache Art und Weise möglich, das Element 2 universell einzusetzen, wobei eine Verbindung mit anderen Elementen je nach gewünschter Ausrichtung der einzelnen Verbindungsvorrichtungen 1 erfolgen kann.

In der Fig. 19 ist ein Anwendungsbeispiel der Verbindungsvorrichtung 1 gezeigt, bei welchem ein Körper 74 für Transport bzw. Verpackungszwecke aus aufricht- bzw. faltbaren Seitenteilen 75 und einem die Seitenteile 75 verbindenden Mittelteil 76 gebildet ist.

Bedingt durch die an der Innenseite der Seitenteile 75 bzw. der Außenseite der Mittelteile 76 angeordneten Verbindungsvorrichtung 1 ist es nunmehr auf einfache Art und Weise möglich, das Volumen bzw. das Fassungsvermögen des Körpers 74 entsprechend an die gewünschten Einsatzbedingungen anpassen zu können, wobei jederzeit eine einfache Verstellung der Seitenteile 75 in Richtung eines Doppelpfeils 77 möglich ist. Die Verbindungsvorrichtung 1, welche sowohl am Mittelteil 76 als auch am Seitenteil 75 angeordnet ist, dient sowohl der Verbindung, Führung als auch der Versteifung des Körpers 74. Es ist aber selbstverständlich auch möglich, nur Seitenteile 75 mit entsprechend angeordneten Verbindungsvorrichtungen 1 einzusetzen.

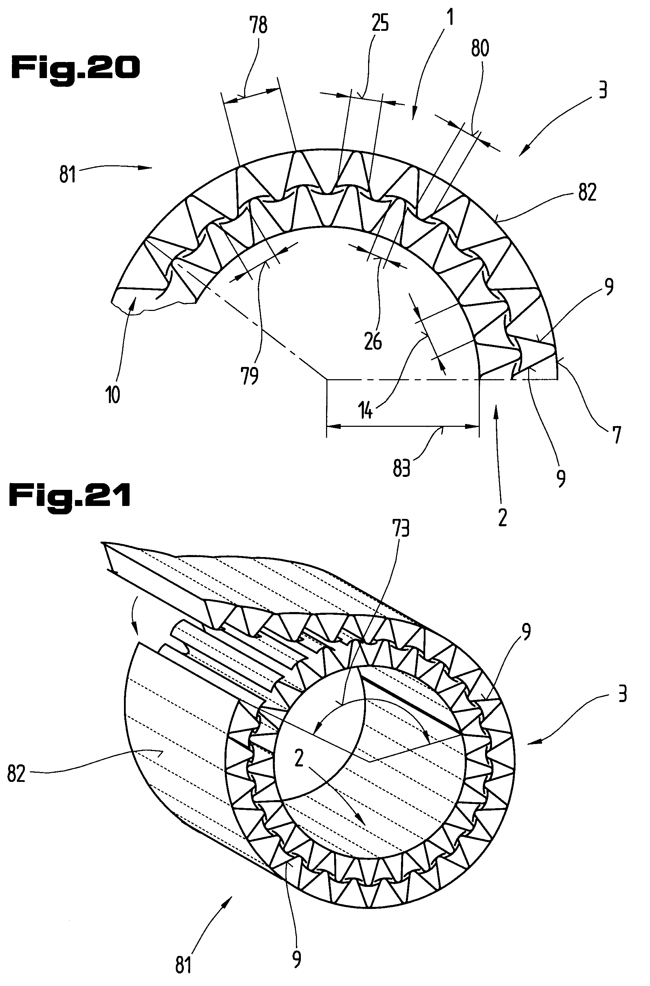

In der Fig. 20 sind die Elemente 2, 3 mit in Eingriff stehender Verbindungsvorrichtung 1 dargestellt, wobei wiederum für gleiche Bauteile gleiche Bezugszeichen verwendet worden sind.

Das Element 2 weist im Gegensatz zum Element 3 im vorliegenden Ausführungsbeispiel eine unterschiedliche Teilung 14, Weite 26 und Stegbreite 25 gegenüber einer Teilung 78, Stegbreite 79 und Weite 80 auf. Durch die unterschiedlich ausgeführte Teilung, Stegbreite bzw. Weite ist es nunmehr möglich, einen Bauteil 81 zu schaffen, welcher einen Zylindermantel 82 mit einem vorbestimmbaren Radius 83 ausbildet. Somit ist es möglich, auch Zylindersegmente mit einem vorbestimmbaren Radius sowie Winkel vorzufertigen, welche in ihrer Längsrichtung gesehen sowohl eine hohe Eigensteifigkeit als auch eine glatte, knickfreie und rund verlaufende Oberfläche aufweisen.

In der Fig. 21 ist der mehrlagig ausgebildete Bauteil 81 mit den im Umfangsbereich gegeneinander versetzt angeordneten Elementen 2, 3 gezeigt, welche den Verbindungsbereich 73 ausbilden und zur vollständigen Schließung des Zylindermantels 82 dienen. Damit ist es auf einfache Art und Weise möglich, rund ausgebildete Gegenstände auf einfache Art und Weise zu umhüllen und im Verbindungsbereich 73 den Zylindermantel 82 ohne zusätzliche Verbindungsmittel mittels der Verbindungsvorrichtung 1 zu einem gemeinsamen Bauteil zu verschließen. Durch die Länge des Verbindungsbereichs 73 läßt sich die Festigkeit der Verbindung steuern.

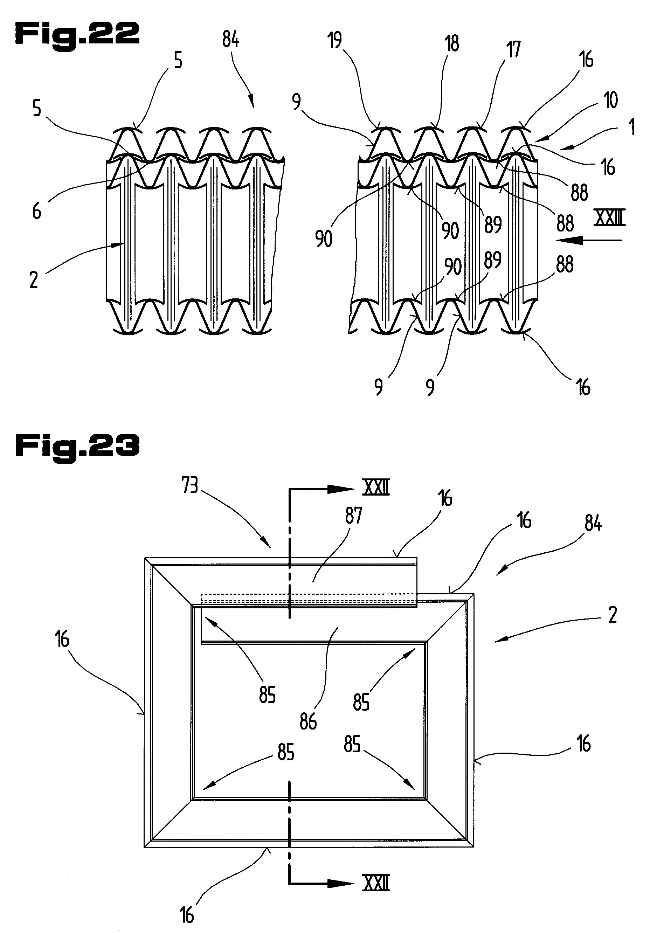

In den Fig. 22 und 23 ist ein weiteres Anwendungsbeispiel der Verbindungsvorrichtung 1 gezeigt, bei welchem ein Bauteil 84, z.B. für Transport- bzw. Verpackungszwecke aus dem einlagigen Element 2 durch entsprechend angeordnete Einkerbungen 85 zu dem zusammenklappbaren Bauteil 84 umgeformt werden kann. Dabei verläuft die Richtung der Einkerbungen 85 quer zur Längserstreckung der einzelnen Stege 16 bis 19.

Beim vorliegenden Ausführungsbeispiel des Elementes 2 sind sowohl die obere bzw. untere Lage 5, 6 aufgetrennt bzw. der Streifen 32 entfernt, wodurch sich beidseits des Kerns ein Teil der Verbindungsvorrichtung 1 ausbildet. Dadurch ist es möglich, einander zugewandte Wandteile 86, 87 des Elementes 2 in dem Verbindungsbereich 73 mittels der Verbindungsvorrichtung 1 ohne jegliche weitere Hilfsmittel miteinander zu verbinden. Durch die Anordnung der einzelnen Einkerbungen 85 am Element 2 läßt sich auf einfache Art und Weise jede beliebige zusammenfaltbare Querschnittsform für den Bauteil 84 erzielen und bei entsprechender Auswahl der Länge des Verbindungsbereiches 73 auch die Festigkeit der Verbindung steuern.

Diese einfache Art der Verbindung der beiden Wandteile 86, 87 des Elementes 2 ist durch die gegenseitige Versetzung der Stege 16 bis 19, welche an der Außenseite des Bauteils 84 angeordnet sind, zu Stegen 88 bis 90, welche an der Innenseite des Bauteils 84 angeordnet sind, möglich. Dies ist durch die gegenseitig versetzte Anordnung der einzelnen Stege an den Erhebungen 11 bzw. Vertiefungen 12 der Wellenschichte 10 auf einfache Art möglich. Diese kann bei Bedarf ohne erheblichen Kraftaufwand getrennt und anschließend wiederum zusammengefügt werden, da diese auf rein mechanischer Basis beruht.

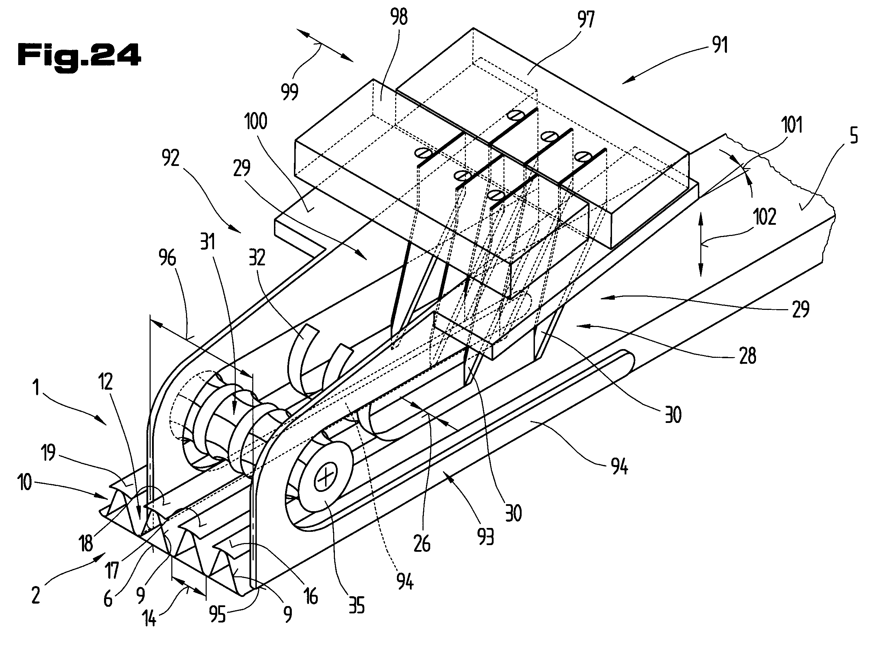

In der Fig. 24 ist eine schematisch angedeutete Bearbeitungseinrichtung 91 gezeigt, welche im vorliegenden Ausführungsbeispiel aus der Trennvorrichtung 28, beispielsweise aus einzelnen Messern 30, und einem Schlitten 92 gebildet ist.

Um eine exakte Führung der Bearbeitungseinrichtung 91 in Bezug auf die Längserstreckkung der Wellenschichte 10 zu erreichen, ist die Trennvorrichtung 28 auf dem bügelförmig ausgebildeten Schlitten 92 angeordnet. Der Schlitten 92 weist auf der dem Element 2 zugewandten Seite Führungseinrichtungen 93 auf, welche im vorliegenden Ausführungsbeispiel durch Fortsätze 94 gebildet sind. Die beiden Fortsätze 94 des Schlittens 92 bilden an der der Lage 6 des Elementes 2 zugewandten Seite je eine Führungsfläche 95 aus, welche sich jeweils an den Vertiefungen 12 der Wellenschichte 10 abstützen. Dabei muß ein Abstand 96 der beiden Führungsflächen 95 der Führungseinrichtungen 93 einem Vielfachen der Teilung 14 der Wellenschichte 10 entsprechen. Dadurch ist gewährleistet, daß bei einem Auftrennen der oberen Lage 5 des Elementes 2 die Bearbeitungseinrichtung 91 exakt in der Längserstreckung der Wellenschichte 10 geführt ist, wodurch es beim Auftrennen dieser Lage 5 zur Ausbildung der einzelnen Stege 16 bis 19 kommt.

Um die Weite 26 bzw. die Breite der Streifen 32 zwischen den einzelnen Stegen 16 bis 19 auf einfache Art und Weise zu verändern, besteht die Trennvorrichtung 28 im vorliegenden Ausführungsbeispiel aus den zwei zueinander versetzt angeordneten Schneideinrichtungen 29, welche auf jeweils diesen zugeordneten Halteeinrichtungen 97, 98 gehaltert sind. Dabei ist der Abstand der einzelnen Messer jeder Schneideinrichtung 29 zueinander entsprechend der Teilung 14 auszurichten.

Wie weiters schematisch angedeutet, ist es möglich, die beiden Halteeinrichtungen 97, 98 gegeneinander entsprechend einem Doppelpfeil 99 auf einer Auflagefläche 100 des Schlittens 92 quer zur Längserstreckung der Wellenschichte 10 zu versetzen, wodurch die Weite 26 zwischen den einzelnen Stegen 16 bis 19 entsprechend variiert werden kann.

Um die Schnittiefe der Trennvorrichtung 28 zu verstellen, ist im vorliegenden Ausführungsbeispiel die Auflagefläche 100 des Schlittens 92 gegenüber der Lage 5 des Elementes 2 um einen Winkel 101 geneigt ausgeführt, wodurch sich in Bezug auf diese eine schiefe Ebene ausbildet, auf welcher die beiden Halteeinrichtungen 97, 98 der Höhe nach gemäß einem Doppelpfeil 102 verstellbar sind. Die Halterung bzw. Fixierung der Halteeinrichtungen 97, 98 bzw. der Messer 30 an diesen kann auf jede beliebige Art und Weise, wie sie aus dem Stand der Technik bekannt sind, erfolgen.

Vorzugsweise kann anschließend an die Trennvorrichtung 28 die konvexe Verformung der Stege 16 bis 19 mit dem Biegewerkzeug 31, welches wiederum in Form von den konkav ausgeführten Druckwalzen 35 gebildet ist, erfolgen, welche im bogenförmigen Verbindungsbereich der Fortsätze 94 mit der Auflagefläche 100 drehbar gelagert sind.

Es ist aber selbstverständlich auch möglich, anstelle der gezeigten Messer 30 der Trennvorrichtung 28 diese durch Klingen, rotierende Scheiben, Laser etc. auszubilden. Es ist lediglich darauf zu achten, daß die Auftrennung der oberen Lage 5 bzw. 7 exakt in der Längserstreckung der Wellenschichte 10 erfolgt, um anschließend ein einwandfreies Zusammenfügen der erfindungsgemäßen Verbindungsvorrichtung 1 zu gewährleisten.

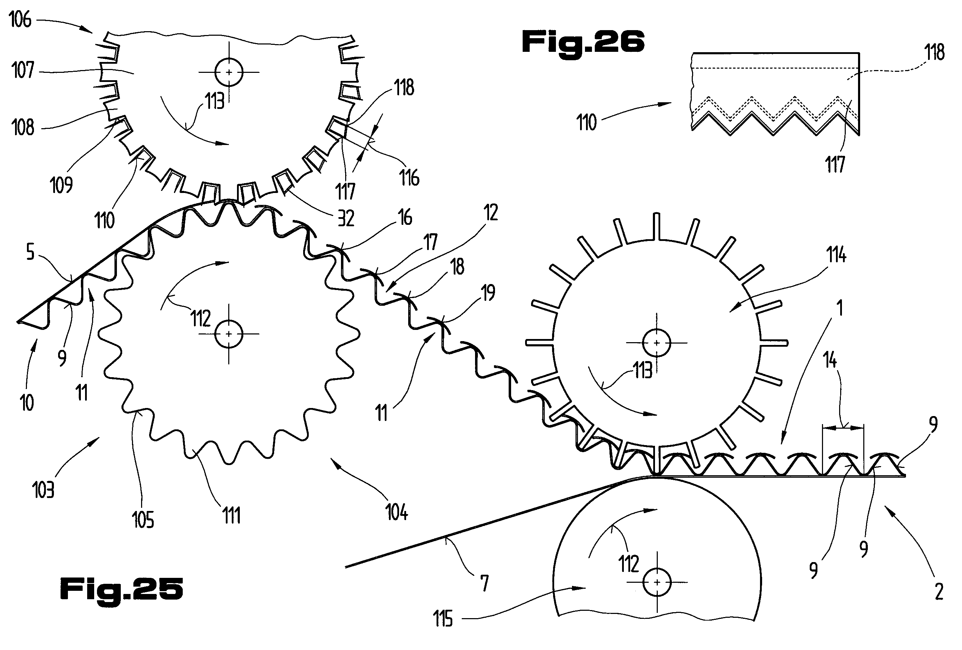

In der Fig. 25 ist eine andere Anlage 103 für die Herstellung der Verbindungsvorrichtung 1 an dem Element 2 gezeigt.

Die Anlage 103 besteht aus einer Stützvorrichtung 104, z.B. einer Welle 105, welche an ihrer Oberseite eine entsprechend der Wellenschichte 10 ausgebildete Oberflächenform aufweist, sowie einer Schneidvorrichtung 106. Die Schneidvorrichtung 106 ist als wellenförmiger Bauteil 107 ausgebildet, an dessen Außenflache in Umfangsrichtung voneinander distanzierte Rippen 108 angeordnet sind. Zwischen den voneinander distanzierten Rippen 108 bilden sich Schlitze 109 aus, welche zur Aufnahme von Schneideinrichtungen 110 dienen.

Beim Durchlauf der Lage 5 mit dem daran befestigten Kern, wie z.B. der Wellenschichte 10 zwischen der Stützvorrichtung 104 und der Schneidvorrichtung 106 stützt sich die Wellenschichte 10 an Fortsätzen 111 der Welle 105 ab, wobei durch die gegengleiche Bewegung der Stützvorrichtung 104 und der Schneidvorrichtung 106 gemäß den Pfeilen 112, 113 die einzelnen, am Umfang der Schneidvorrichtung 106 angeordneten Schneideinrichtungen 110 die Lage 5 entsprechend auftrennen, wodurch sich an den Erhebungen 11 der Wellenschichte 10 wiederum die einzelnen Stege 16 bis 19 ausbilden.

Durch eine entsprechend konkave Ausbildung der Rippen 108 an der der Stützvorrichtung 104 zugewandten Oberfläche ist es möglich, die einander zugewandten Randbereiche der Stege 16 bis 19 in Richtung der Vertiefungen 12 der Wellenschichte 10 zu verformen.

Bei diesem Bearbeitungsvorgang zwischen der Stützvorrichtung 104 und der Schneidvorrichtung 106 wird einerseits die Lage 5 entsprechend aufgetrennt und andererseits der zwischen den Stegen abgetrennte Streifen 32 gleichzeitig abgenommen und eventuell während der weiteren Umdrehung des Bauteils 107 an einer eigens dafür vorgesehenen Position aus der Schneideinrichtung 110 entfernt. Dadurch steht die entleerte Schneideinrichtung 110 wiederum für einen erneuten Schneidevorgang zur Verfügung.

Anschließend an diesen Schneide- bzw. Verformungsvorgang ist es möglich, zur Bildung des Elementes 2 die untere Lage 7 an der Wellenschichte 10 anzuformen. Dazu wird die Wellenschichte 10, welche nach dem Austritt aus der Stützvorrichtung 104 bzw. Schneidvorrichtung 106 quer zu dessen Längserstreckung eine leicht variable Zustandsform aufweist, in einer eigenen Positioniereinrichtung 114 entsprechend der gewünschten Teilung 14 ausgerichtet und in diesem Zustand mit der unteren Lage 7 mittels einer Andrückvorrichtung 115 verbunden. Somit ist die Wellenschichte 10 entsprechend der Teilung 14 mit der unteren Lage 7 verbunden, wodurch das Element 2 bzw. 3 ausgebildet ist.

Die einzelnen Antriebe bzw. Steuerungen der verschiedenen Einrichtungen sind nicht dargestellt und können durch beliebige Komponenten, wie sie aus dem Stand der Technik bekannt sind, gebildet sein.

Für den einwandfreien Schneidvorgang ist es notwendig, eine Distanz 116 von Schneiden 117 bzw. 118 der Schneideinrichtung 110 bzw. die Länge der einzelnen Schneiden derart auszuwählen, daß ein einwandfreier Schnittvorgang ermöglicht ist. Beim vorliegenden Ausführungsbeispiel sind die beiden Schneiden 117, 118 unterschiedlich lang dargestellt. Es ist aber auch möglich, beide Schneiden 117, 118 gleich lang auszubilden.

Selbstverständlich ist es möglich, eine weitere Schneidevorrichtung im Anschluß an die Positioniereinrichtung 114 anzuordnen, um auch die untere Lage 7 entsprechend aufzutrennen. Es ist aber auch eine Mehrfachanordnung bzw. eine beliebige Kombination der einzelnen Einrichtungen untereinander möglich, um beispielsweise auch einen mehrlagigen bzw. mehrschichtigen Aufbau der Elemente 2, 3 herstellen zu können.

Wie weiters besser aus der Fig. 26 zu ersehen ist, weist die doppelschneidig ausgebildete Schneideinrichtung 110 sowohl an der Schneide 117 als auch an der Schneide 118 eine gezackte Ausführung auf, welche sich in Längsrichtung der Schneideinrichtung erstreckt. Durch eine entsprechende Wahl der Distanz 116 und jenem Weg, der notwendig ist, um die Lage 5 vollständig aufzutrennen, ist sichergestellt, daß der Abtrennvorgang des Streifens 32 gesichert erfolgt.

Durch die gezackte Ausführung der einzelnen Schneiden 117 bzw. 118 wird weiters das Eindringen der einzelnen Schneiden in die Lage 5 erheblich erleichtert, wodurch Verformungen der Lage 5 während des Schneidvorganges ebenfalls vermieden werden.

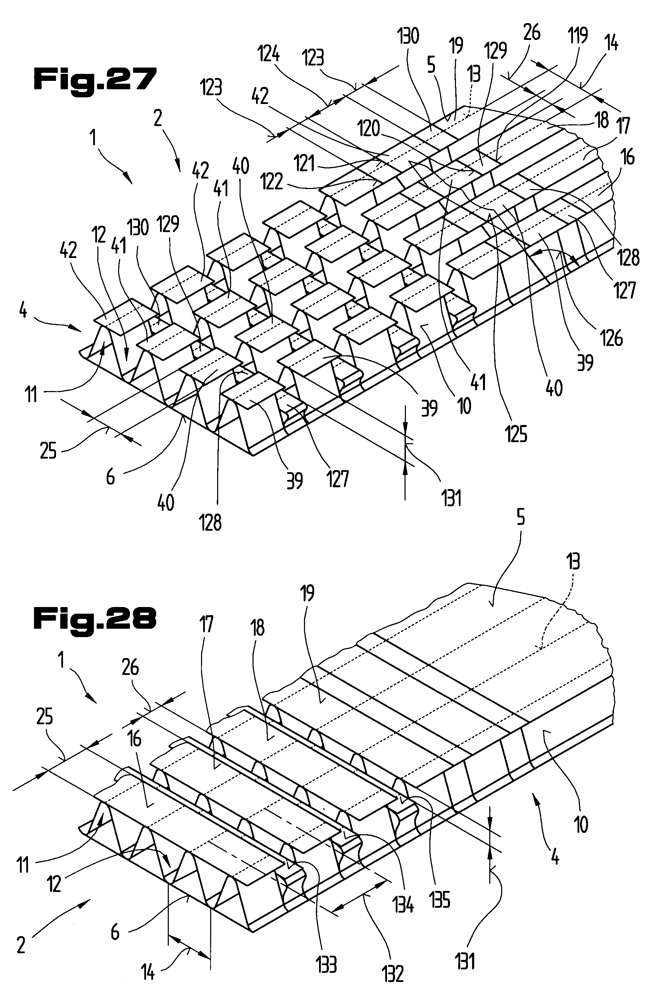

In der Fig. 27 ist eine weitere Ausführungsmöglichkeit der Verbindungsvorrichtung 1 gezeigt, wobei für bereits in den vorherigen Figuren beschriebene Teile gleiche Bezugszeichen verwendet werden.

Das Element 2 entspricht im vorliegenden Ausführungsbeispiel grundsätzlich der Ausführungsform gemäß der Fig. 1 und besteht wiederum aus einer einlagigen Wellpappe 4, welche aus der oberen bzw. unteren Lage 5, 6 und dem dazwischen angeordneten Kern gebildet ist. Die obere Lage 5 ist wiederum in Stege 16 bis 19 mit einer Stegbreite 25 aufgeteilt, welche entlang von schematisch eingetragenen Verbindungsbereichen 13 in einer Teilung 14 an den einzelnen Erhebungen 11 mit der Wellenschichte 10 des Kerns verbunden sind und deren Längsseitenkanten quer zu ihrer Längserstreckung um die Weite 26 voneinander distanziert sind.

Weiters ist im rückwärtigen Teil der Fig. 27 angedeutet, daß die einzelnen Stege 16 bis 19 der oberen Lage 5 unverformt, d.h. ebenflächig ausgebildet sind und zusätzlich quer zu ihrer Längserstreckung durchtrennt sind, wodurch sich Schnittkanten 119 bis 122 ausbilden. Dabei ist ein Abstand 123 zwischen den Schnittkanten 119 und 120 bzw. 121 und 122 geringer einem Abstand 124 zwischen den Schnittkanten 120 und 121. Somit bilden sich zwischen den einzelnen Schnittkanten 120 und 121 in etwa quadratische Stegteile 39 bis 42 aus, wie dies auch bereits in den Fig. 6 bis 9 näher beschrieben ist. Dabei entspricht der Abstand 123 in etwa der Distanz 43 und der Abstand 124 in etwa der Länge 44 in der Fig. 6. Eine Tiefe der Schnittkanten 119 bis 122 kann ausgehend von der oberen Lage 5 die Wellenschichte 10 durchtrennend bis in den Bereich der unteren Lage 6 reichen, wobei darauf geachtet werden muß, daß diese nicht durchtrennt wird, da ansonst der Zusammenhalt des gesamten Elementes 2 nicht mehr gegeben ist.

Die Ausrichtung einer Schnittebene 125, welche durch die einzelnen Schnittkanten 119 bis 122 verläuft, kann entweder rechtwinkelig zu den oberen bzw. unteren Lagen 5 bzw. 6 verlaufen, wobei es aber auch möglich ist, die Schnittebene 125 unter einem Winkel 126, welcher größer 90° ist, anzuordnen, wodurch die Schnittkanten 119 der einzelnen Stege 16 bis 19 den Verbindungsbereich 13 der Vertiefungen 12 der Wellenschichte 10 überragen. Es ist aber auch selbstverständlich möglich, den Winkel 126 kleiner 90° auszubilden, wodurch sich in der Wellenschichte 10 ein breiterer Fußbereich für die Verbindung der Wellenschichte 10 mit der unteren Lage 6 ausbildet. Durch die Variation des Winkels 126 läßt sich die Festigkeit bzw. Steifigkeit des Elementes 2 bzw. 3 in Richtung der Längserstreckung der Wellenschichte 10 einfach variieren.

Wie weiters noch dem rückwärtigen Teil der Fig. 27 zu entnehmen ist, bilden sich zwischen den Schnittkanten 119 und 120 den einzelnen Stegen 16 bis 19 zugeordnete Stegabschnitte 127 bis 130 aus, welche in ihren Abmessungen durch den Abstand 123 zwischen den Schnittkanten 119 und 120 bzw. die Stegbreite 25 gebildet sind. Weiters sei hier erwähnt, daß es selbstverständlich möglich ist, die Abstände 123, 124 sowie die Stegbreite 25 und die Weite 26 beliebig, jedoch in Abhängigkeit zur Teilung 14, zu verändern, wodurch sich wiederum die Festigkeit der Verbindungsvorrichtung 1 auf einfach Art und Weise beeinflussen läßt. Die einzelnen Stegabschnitte 127 bis 130 sind dabei, wie dies im rückwärtigen Teil der Fig. 27 dargestellt ist, in einer Ebene zu den einzelnen Stegen 16 bis 19 der oberen Lage 5 angeordnet. Durch diese Auftrennung der einzelnen Stege 16 bis 19 quer zu ihrer Längserstreckung ist es auf einfache Art und Weise möglich, das Element 2 an jeder beliebigen Position abzuknicken, ohne daß zusätzliches Werkzeug benötigt wird.

Es ist aber auch möglich, wie dies im vorderen Abschnitt der Fig. 27 angedeutet ist, die Stegabschnitte 127 bis 130 gegenüber den Stegteilen 39 bis 42 um eine Höhendifferenz 131 in Richtung der unteren Lage 6 zu versetzen, um eine ähnliche Ausbildung wie in Fig. 6 zu erreichen. Dabei besteht bei dieser Ausführungsform gegenüber der Fig. 6 lediglich der Unterschied, daß die einzelnen Stegabschnitte 127 bis 130 mit den diesen zugehörigen Teilbereichen der Wellenschichte 10 mit der unteren Lage 6 verbunden bleiben und lediglich der Höhe nach z.B. durch Niederdrücken der Wellenschichte 10 gegenüber den Stegteilen 39 bis 42 versetzt sind.

Dadurch entsteht weiters die Möglichkeit, wie dies bereits anhand der Fig. 7 und 8 beschrieben ist, das Element 3 mit den durchgehenden Stegen 20 bis 22 sowohl in Längserstreckung des Elementes 2 als auch 90° dazu, also in Querrichtung zu dessen Längserstreckung, mit diesem zu verbinden. Dabei ist auf eine entsprechende Ausbildung der Stegbreite 25 des Abstandes 123 bzw. der Länge 44 sowie des Abstandes 124 bzw. der Distanz 43 eines Teils der Verbindungsvorrichtung 1 in Bezug auf die Stegbreite 25 der Stege 20 bis 22 des Elementes 3 Bedacht zu nehmen.

Es ist aber auch ebenso möglich, die einzelnen Stegteile 39 bis 42 und die darunter verbleibende Wellenschichte 10 durch noppenartige Vorsprünge, welche in ihren Querschnittsabmessungen den einzelnen Feldern entsprechen, zu ersetzen und mit der unteren Lage 6 zu verbinden bzw. einstückig mit dieser auszubilden. Als Werkstoff können z.B. verschiedene Kunststoffe, gepreßtes Papiermaché, Holz etc. verwendet werden.

In der Fig. 28 ist ein Element 2 mit der erfindungsgemäßen Verbindungsvorrichtung 1 gezeigt, welches zur Verbindung mit einem Element 3 dient, wie dies bereits in den Fig. 20 und 21 beschrieben ist und zur Ausbildung von gewölbten bzw. runden Bauteilen 81 Verwendung findet, wobei wiederum für gleiche Teile gleiche Bezugszeichen wie in den Fig. 20 und 21 verwendet werden.

Dabei besteht das Element 2 wiederum aus der Wellpappe 4 mit einer oberen bzw. unteren Lage 5, 6 und der dazwischen angeordneten Wellenschichte 10 mit ihren Erhebungen 11 bzw. Vertiefungen 12.

Da es für die gekrümmte Ausbildung des Bauteils 81 notwendig ist, zwischen den Elementen 2 und 3 verschiedene Teilungen 132 bzw. 78 zu verwenden, ist es gemäß der Ausführungsform in den Fig. 20 bzw. 21 notwendig, unterschiedliche Wellpappe 4 je nach gewünschtem Krümmungsradius zu verwenden.

Dahingehend wird bei der Ausführungsform gemaß der Fig. 28 für das Element 2 die obere Lage 5 quer zur Längserstreckung der Wellenschichte 10 bzw. zu deren Verbindungsbereichen 13 aufgetrennt, wodurch sich wiederum Stege 16 bis 19 mit einer Stegbreite 25 ausbilden, welche zueinander in der Teilung 132 angeordnet sind. Zwischen den einzelnen Stegen 16 bis 19 bilden sich einzelne Zwischenstege 133 bis 135 aus, welche eine Weite 26 zwischen den Längsseitenkanten der Stege 16 bis 19 aufweisen.

Durch diese meist im rechten Winkel zur Langserstreckung der Wellenschichte 10 bzw. deren Verbindungsbereichen 13 erfolgte Auftrennung der oberen Lage 5 ist es möglich, unabhängig von der Teilung 14 der Wellpappe 4 die entsprechend der Teilung 78 notwendige Teilung 132 der einzelnen Stege 16 bis 19 zueinander in der oberen Lage 5 auszubilden.

Um nun die erfindungsgemäße Verbindungsvorrichtung 1 zwischen den Elementen 2 und 3 zu erreichen, ist es notwendig, wie dies bei den Zwischenstegen 133 bis 135 gezeigt ist, diese mit den ihnen zugeordneten Abschnitten der Wellenschichte 10 um die Höhendifferenz 131 gegenüber den Stegen 16 bis 19 der oberen Lage 5 in Richtung der unteren Lage 6 zu versetzen, wie dies z.B. durch einen Niederdrückvorgang realisiert werden kann, ohne diese zu entfernen.

Damit sind die einzelnen Stege 16 bis 19 entlang der Verbindungsbereiche 13 über die Stegbreite 25 mit der Wellenschichte 10 verbunden, wodurch sich ein stabiler Zusammenhalt der einzelnen Stege 16 bis 19 über die Wellenschichte 10 zur unteren Lage 6 des Elementes 2 ergibt. Auch bei diesem Ausführungsbeispiel sind die einzelnen Stege 16 bis 19 bzw. die dazwischen angeordneten Zwischenstege 133 bis 135 ebenflächig ausgebildet.

Wie bereits zuvor in der Fig. 27 beschrieben, kann die Tiefe der Auftrennung der oberen Lage 5 und der darunter angeordneten Wellenschichte 10 bis in den Bereich der unteren Lage 6 erfolgen, wobei jedoch darauf geachtet werden muß, daß die untere Lage 6 unbeschädigt erhalten bleibt, um so einen einseitigen guten Zusammenhalt für das Element 2 sicher zu stellen.

Durch diese Ausführungsform ist nunmehr gewährleistet, daß zu standardmäßig hergestellten Elementen 3 mit ihrer einheitlichen Teilung 78 je nach gewünschtem Krümmungsradius das Element 2 unabhängig von der Teilung 14 der Wellenschichte 10 mit der notwendigen Teilung 132 für die Ausbildung eines gekrümmten Bauteils 81 hergestellt werden kann. Damit sind wiederum jene erfindungsgemäßen Vorteile erreicht, wie dies auch bereits anhand der Fig. 20 und 21 beschrieben worden ist.

### Bezugszeichenaufstellung

- 1: Verbindungsvorrichtung
- 2: Element
- 3: Element
- 4: Wellpappe
- 5: Lage
- 6: Lage
- 7: Lage
- 8: Lage
- 9: Längsrippe
- 10: Wellenschichte
- 11: Erhebung
- 12: Vertiefung
- 13: Verbindungsbereich
- 14: Teilung
- 15: Bauhöhe
- 16: Steg
- 17: Steg
- 18: Steg
- 19: Steg
- 20: Steg
- 21: Steg
- 22: Steg
- 23: Steg
- 24: Steg
- 25: Stegbreite
- 26: Weite
- 27: Bearbeitungseinrichtung
- 28: Trennvorrichtung
- 29: Schneideinrichtung
- 30: Messer
- 31: Biegewerkzeug
- 32: Streifen
- 33: Trennlinie
- 34: Trennlinie
- 35: Druckwalze
- 36: Steg
- 37: Längsrippe
- 38: Dicke
- 39: Stegteil
- 40: Stegteil
- 41: Stegteil
- 42: Stegteil
- 43: Distanz
- 44: Länge
- 45: Winkel
- 46: Stegteil
- 47: Stegteil
- 48: Stegteil
- 49: Ausnehmung
- 50: Breite
- 51: Biegevorrichtung
- 52: Baukörper
- 53: Endbereich
- 54: Länge
- 55: Stegbreite
- 56: Weite
- 57: Pfeil
- 58: Pfeil
- 59: Winkel
- 60: Flankenwinkel
- 61: Rastnase
- 62: Normale
- 63: Symmetrieachse
- 64: Winkel
- 65: Zwischenlage
- 66: Steg
- 67: Steg
- 68: Steg
- 69: Steg
- 70: Unterseite
- 71: Oberseite
- 72: Teil
- 73: Verbindungsbereich
- 74: Körper
- 75: Seitenteil
- 76: Mittelteil
- 77: Doppelpfeil
- 78: Teilung
- 79: Stegbreite
- 80: Weite
- 81: Bauteil
- 82: Zylindermantel
- 83: Radius
- 84: Bauteil
- 85: Einkerbung
- 86: Wandteil
- 87: Wandteil
- 88: Steg
- 89: Steg
- 90: Steg
- 91: Bearbeitungseinrichtung
- 92: Schlitten
- 93: Führungseinrichtung
- 94: Fortsatz
- 95: Führungsfläche
- 96: Abstand
- 97: Halteeinrichtung
- 98: Halteeinrichtung
- 99: Doppelpfeil
- 100: Auflagefläche
- 101: Winkel
- 102: Doppelpfeil
- 103: Anlage
- 104: Stützvorrichtung
- 105: Welle
- 106: Schneidvorrichtung
- 107: Bauteil
- 108: Rippe
- 109: Schlitz
- 110: Schneideinrichtung
- 111: Fortsatz
- 112: Pfeil
- 113: Pfeil
- 114: Positioniereinrichtung
- 115: Andrückvorrichtung
- 116: Distanz
- 117: Schneide
- 118: Schneide
- 119: Schnittkante
- 120: Schnittkante
- 121: Schnittkante
- 122: Schnittkante
- 123: Abstand
- 124: Abstand
- 125: Schnittebene
- 126: Winkel
- 127: Stegabschnitt
- 128: Stegabschnitt
- 129: Stegabschnitt
- 130: Stegabschnitt
- 131: Höhendifferenz
- 132: Teilung
- 133: Zwischensteg
- 134: Zwischensteg
- 135: Zwischensteg

## Patentansprüche

1. Bahnförmiges Element (2; 3) mit mehreren sich in Längsrichtung erstreckenden Längsrippen (9), wobei an Erhebungen (11) derselben zumindest mehrere rechteckige, streifenförmige Stege (16-19; 20-24; 36; 66-69; 88-90) einer oberen Lage (5; 7) mit deren Flachseiten in einer Ebene angeordnet sind und diese jeweils beidseits über die Längsrippen (9) quer zu deren Längserstreckung vorragen und zwei unmittelbar benachbarte Stege (16-19; 20-24; 36; 66-69; 88-90) quer zu deren Längserstreckung voneinander distanziert sowie in insbesondere gleicher Teilung (14) zueinander angeordnet sind, dadurch gekennzeichnet, daß die Längsrippen (9) im Querschnitt zur oberen Lage (5; 7) und zueinander geneigt angeordnet sind und eine Wellenschichte (10) mit Erhebungen (11) und Vertiefungen (12) ausbilden und daß auf jeweils zwei die Wellenschichte (10) bildenden Längsrippen (9) je ein streifenförmiger Steg (16-19; 20-24; 36; 66-69; 88-90) angeordnet ist und die Stege (16-19; 20-24; 36; 66-69; 88-90) an den Erhebungen (11) der Wellenschichte (10) in Verbindungsbereichen (13) befestigt sind und die Erhebungen (11) und Vertiefungen (12) in einer Bauhöhe (15) voneinander distanziert sind.

2. Bahnförmiges Element nach Anspruch 1, dadurch gekennzeichnet, daß auf den Vertiefungen (12) der Wellenschichte (10) eine weitere untere Lage (6; 8) befestigt ist.

3. Bahnförmiges Element nach einem oder mehreren der vorhergehenden Ansprüche, dadurch gekennzeichnet, daß ein zwischen zwei einander benachbart, jedoch quer zu Längsachse bzw. der Längsrippen (9) voneinander distanziert angeordneten Stegen (16-19; 20-24) verbleibender Zwischensteg (133-135), der Höhe nach in Richtung der unteren Lage (6; 8) versetzt angeordnet ist.

4. Bahnförmiges Element nach Anspruch 2, dadurch gekennzeichnet, daß die untere Lage (6; 8) aus zumindest mehreren streifenförmigen Stegen (16-19; 20-24; 36; 66-69; 88-90) mit einem rechteckigen Querschnitt gebildet ist, die jeweils auf den Vertiefungen (12) parallel zueinander verlaufen, mit ihren Flachseiten in einer gemeinsamen Ebene und quer zur Längsachse oder den Längsrippen (9, 37) in gleicher Teilung angeordnet sind.

5. Bahnförmiges Element nach einem oder mehreren der vorhergehenden Ansprüche, dadurch gekennzeichnet, daß die Stege (16-19; 20-24; 36; 66-69; 88-90) der oberen und unteren Lage (5, 7; 6, 8) um eine halbe Teilung zwischen den Längsachsen der Stege (16-19; 20-24; 36; 66-69; 88-90), quer zu den Längsachsen der Stege (16-19; 20-24; 36; 66-69; 88-90) versetzt sind.

6. Bahnförmiges Element nach einem oder mehreren der vorhergehenden Ansprüche, dadurch gekennzeichnet, daß Längsseitenkanten der Stege (16-19; 20-24; 36; 66-69; 88-90) einander unmittelbar benachbart sind.

7. Bahnförmiges Element nach einem oder mehreren der vorhergehenden Ansprüche, dadurch gekennzeichnet, daß eine Stegbreite (25) quer zur Längsrichtung der Längsrippen (9) bzw. der Erhebungen (11) oder Vertiefungen (12) geringer ist, als eine Teilung (14) zwischen den Längsrippen bzw. den Erhebungen (11) oder Vertiefungen (12).

8. Bahnförmiges Element nach einem oder mehreren der vorhergehenden Ansprüche, dadurch gekennzeichnet, daß auf der von der oberen Lage (5; 7) abgewendeten Seite der Längsrippen (9) bzw. Längsstege eine durch eine durchgehende Schichte gebildete Zwischenlage (65) angeordnet ist, und daß auf der von den Längsrippen (9) bzw. den Vertiefungen (12) der Wellenschichte (10) abgewendeten Auflagefläche dieser Zwischenlage (65) ebenfalls eine Wellenschichte (10) oder Längsrippen (9) angeordnet sind.

9. Bahnförmiges Element nach Anspruch 8, dadurch gekennzeichnet, daß die auf den beiden Auflageflächen der Zwischenlage (65) angeordneten Längsrippen (9) bzw. die Wellenschichten (10) um eine halbe Teilung (14) gegenüber der Teilung (14) zwischen den der oberen Lage (5; 7) zugeordneten Längsrippen (9) bzw. der Wellenschichte (10) versetzt angeordnet sind.

10. Bahnförmiges Element nach einem oder mehreren der vorhergehenden Ansprüche, dadurch gekennzeichnet, daß die untere Lage (6; 8) aus einer durchgehenden Schichte aus Pappe und/oder Papier und/oder Kunststoff gebildet ist.

11. Bahnförmiges Element nach einem oder mehreren der vorhergehenden Ansprüche, dadurch gekennzeichnet, daß eine der Lagen (5, 6; 6, 8) insbesondere die untere Lage (6; 8) aus einer durchgehenden ebenflächigen knickfesten Platte, z.B. aus Holz, Hartfaser, Blech oder dgl. besteht.

12. Bahnförmiges Element nach einem oder mehreren der vorhergehenden Ansprüche, dadurch gekennzeichnet, daß die Teilung (14) zwischen den Längsrippen (9) bzw. den Erhebungen (11) und/oder Vertiefungen (12) der Wellenschichte (10) auf den einander gegenüberliegenden Auflageflächen der Zwischenlage (65) unterschiedlich groß ist.

13. Bahnförmiges Element nach einem oder mehreren der vorhergehenden Ansprüche, dadurch gekennzeichnet, daß die Längsrichtung der Längsrippen (9) und/oder der Erhebungen (11) bzw. Vertiefungen (12) auf den beiden Auflageflächen der Zwischenlage (65) senkrecht zueinander verlaufen.

14. Bahnförmiges Element nach einem oder mehreren der vorhergehenden Ansprüche, dadurch gekennzeichnet, daß mehrere Wellenschichten (10) in Längsrichtung der Erhebungen (11) bzw. Vertiefungen (12) oder der Längsrippen (9) in einer Distanz (43) hintereinander auf einer durchgehenden Schichte der unteren Lage (6; 8) oder einer Zwischenlage (65) befestigt sind, und daß Stegteile (39-42; 46-48) auf den einzelnen Längsrippen (9) bzw. Erhebungen (11) oder Vertiefungen (12) quer zur Längsrichtung der Erhebungen (11) bzw. Vertiefungen (12) und gegebenenfalls in Längsrichtung vorragen.

15. Bahnförmiges Element nach einem oder mehreren der vorhergehenden Ansprüche, dadurch gekennzeichnet, daß zwei in Längsrichtung der Längsrippen (9) bzw. der Erhebungen (11) oder Vertiefungen (12) der Wellenschichte (10) hintereinander angeordnete Längsrippen (9) bzw. Wellenschichten (10) durch Querkanäle voneinander getrennt sind.

16. Bahnförmiges Element nach einem oder mehreren der vorhergehenden Ansprüche, dadurch gekennzeichnet, daß eine einer Breite der Querkanäle entsprechende Distanz (43) gleich oder größer der Länge (44) oder der Stegbreite (25) der Stegteile (39-42; 46-48) ist.

17. Bahnförmiges Element nach einem oder mehreren der vorhergehenden Ansprüche, dadurch gekennzeichnet, daß die Längsseitenkanten der Stege (16-19; 20-24; 36; 66-69; 88-90) in Längsrichtung der Längsrippen (9) bzw. der Erhebungen (11) oder Vertiefungen (12) konisch bzw. pfeilförmig zueinander verlaufen.

18. Bahnförmiges Element nach einem oder mehreren der vorhergehenden Ansprüche, dadurch gekennzeichnet, daß die Längsseitenkanten der Stege (16-19; 20-24; 36; 66-69; 88-90) mit vorspringenden Rastnasen (61) bzw. Verzahnungen versehen sind, wobei vorzugsweise eine Flanke der Verzahnung senkrecht zur Längsachse der Längsrippen (9) bzw. der Erhebungen (11) oder Vertiefungen (12) ausgerichtet ist.

19. Bahnförmiges Element nach einem oder mehreren der vorhergehenden Ansprüche, dadurch gekennzeichnet, daß eine Querschnittsform der Stege (16-19; 20-24; 36; 66-69; 88-90) senkrecht zur Längsrichtung der Längsrippen (9) oder der Wellenschichte (10) C-förmig ist.

20. Bahnförmiges Element aus Wellpappe mit einer Wellenschichte aus Papier bzw. Karton und einer auf den Erhebungen der Wellenschichte über eine Kleberschichte befestigte obere Lage aus Papier bzw. Karton und einer auf den diesen Erhebungen gegenüberliegenden Vertiefungen der Wellenschichte ebenfalls über eine Kleberschichte befestigten unteren Lage oder Zwischenlage aus Papier bzw. Karton, dadurch gekennzeichnet, daß zumindest die obere Lage (5, 7) im Bereich der zwischen den Erhebungen (11) liegenden Vertiefungen (12) durchtrennt ist, oder die obere Lage (5, 7) durch auf den Erhebungen (11) in deren Längsrichtung verlaufende Stege (16-19; 20-24; 36; 66-69; 88-90) gebildet ist, die quer zu deren Längsrichtung in Abstand voneinander angeordnet sind.

21. Bahnförmiges Element nach Anspruch 20, dadurch gekennzeichnet, daß die Stege (16-19; 20-24; 36; 66-69; 88-90) durch Einfluß von Temperatur und/oder Druck und/oder Feuchtigkeit konvex, insbesondere auf einen C-förmigen Querschnitt bleibend verformt sind.

22. Verbindungsvorrichtung zwischen zwei bahnförmigen Elementen (2, 3) mit jeweils mehreren sich in Längsrichtung erstreckenden Längsrippen (9, 37), wobei an Erhebungen (11) derselben zumindest mehrere rechteckige, streifenförmige Stege (16-19; 20-24; 36; 66-69; 88-90) bzw. Stegteile (39-42; 46-48) einer oberen Lage (5; 7) mit deren Flachseiten in einer Ebene angeordnet sind und diese jeweils beidseits über die Längsrippen (9, 37) quer zu deren Längserstreckung vorragen und zwei unmittelbar benachbarte Stege (16-19; 20-24; 36; 66-69; 88-90) bzw. Stegteile (39-42; 46-48) quer zu deren Längserstreckung voneinander distanziert sowie in insbesonderer gleicher Teilung (14) zueinander angeordnet sind, dadurch gekennzeichnet, daß beim ersten und/oder zweiten bahnförmigen Element (2, 3) die Längsrippen (9, 37) im Querschnitt zur oberen Lage (5, 7) und zueinander geneigt angeordnet sind und eine Wellenschichte (10) mit Erhebungen (11) und Vertiefungen (12) ausbilden und daß auf jeweils zwei die Wellenschichte (10) bildenden Längsrippen (9; 37) je ein streifenförmiger Steg (16-19; 20-24; 36; 66-69; 88-90) bzw. Stegteil (39-42; 46-48) angeordnet ist und die Stege (16-19; 20-24; 36; 66-69; 88-90) bzw. Stegteile (39-42; 46-48) an den Erhebungen (11) der Wellenschichte (10) in Verbindungsbereichen (13) befestigt sind und die Erhebungen (11) und Vertiefungen (12) in einer Bauhöhe (15) voneinander distanziert angeordnet sind und daß der über den Verbindungsbereich (13) vorragende Vorsprung einen Kupplungsteil der Verbindungsvorrichtung (1) bildet, wobei die Kupplungsteile des ersten Elementes (2) die Kupplungsteile des weiteren Elementes (3) auf der der unteren Lage (8; 6) bzw. der Zwischenlage (65) oder der Wellenschichte (10) zugewandten Seite hintergreifen.

23. Verbindungsvorrichtung nach Anspruch 22, dadurch gekennzeichnet, daß die Längsachsen der Stege (16-19; 20-24; 36; 66-69; 88-90) der oberen und der unteren Lage (5, 7; 6, 8) zueinander quer zu ihrer Längserstreckung um eine halbe Teilung (14) versetzt angeordnet sind.

24. Verbindungsvorrichtung nach Anspruch 22 oder 23, dadurch gekennzeichnet, daß die Vorsprünge der Stege (16-19; 20-24; 36; 66-69; 88-90) bzw. Stegteile (39-42; 46-48) in zu der sie bildenden Lage senkrechter Richtung elastisch verformbar ausgebildet sind

25. Verbindungsvorrichtung nach einem oder mehreren der vorhergehenden Ansprüche, dadurch gekennzeichnet, daß ein Element (3) durch einen Kunststoff oder Holz insbesondere einen Kunststoffschaum oder Styropor gebildet ist und zur Aufnahme der Stege (16-19; 20-24; 36; 66-69; 88-90) bzw. Stegteile (39-42; 46-48) mit in derselben Teilung (14) angeordnete nutförmige parallel zur Längsrichtung der Längsstege bzw. Längsrippen (9, 37) sich erstreckenden Ausnehmungen (49) versehen ist.

26. Verbindungsvorrichtung nach Anspruch 25, dadurch gekennzeichnet, daß die Ausnehmungen (49) im Kunststoff bzw. Schaumkunststoff oder in Styropor in einer senkrecht zur Längsrichtung derselben verlaufenden Ebene U- bzw. C-förmig ist, und daß eine Breite (50) der Ausnehmungen (49) gleich oder bevorzugt kleiner ist als die Stegbreite (25) der Stege (16-19; 20-24; 36; 66-69; 88-90) bzw. Stegteile (39-42; 46-48).

27. Verbindungsvorrichtung nach einem oder mehreren der vorhergehenden Ansprüche, dadurch gekennzeichnet, daß die Stege (16-19; 20-24; 36; 66-69; 88-90) und/oder Stegteile (39-42; 46-48) ebenflächig ausgebildet, oder unter Bezug auf die Längsrippen (9, 37) bzw. die Wellenschichte (10) konkav verformt sind.

28. Verfahren zur Herstellung eines bahnförmigen Elementes, bei welchem auf eine Wellenschichte oder auf einer unteren Lage angeordneten parallel zueinander verlaufenden Längsrippen eine Lage aus Kunststoff oder Papier, insbesondere Pappe, aufgebracht und über Kleber miteinander verbunden werden, und daß nach dem Aushärten des Klebers zumindest die obere Lage hin zur Längsachse der Längsrippen bzw. der Erhöhungen und/oder Vertiefungen parallelen Richtung und zwischen diesen Längsrippen bzw. Erhebungen bzw. Vertiefungen durchtrennt oder teilweise entfernt werden, sodaß die einander zugewandten Längsseitenkanten der Stege bzw. Stegteile voneinander getrennt und beabstandet sind.

## Claims

1. Web-like element (2; 3) with several longitudinal ribs (9) extending in longitudinal direction, whereby on elevations (11) thereof at least several rectangular, strip-like webs (16-19; 20-24; 36; 66-69;88-90) of an upper layer (5; 7) are arranged with their flat sides in a common plane and the latter project respectively on both sides over the longitudinal ribs (9) at right angles to their longitudinal extension, and two immediately adjacent webs (16-19; 20-24; 36; 66-69; 88-90) at right angles to their longitudinal extension are spaced apart from one another and are arranged in particular with equal spacing (14), characterised in that the longitudinal ribs (9) in cross section are arranged inclined towards the upper layer (5; 7) and one another and form a corrugated layer (10) with elevations (11) and depressions (12), and in that on two longitudinal ribs (9) forming the corrugated layer (10) a strip-like web (16-19; 20-24; 36; 66-69; 88-90) is arranged and the webs (16-19; 20-24; 36; 66-69; 88-90) are secured onto the elevations (11) of the corrugated layer (10) in connecting regions (13) and the elevations (11) and depressions (12) are spaced apart from one another by a height (15).

2. Web-like element according to claim 1, characterised in that an additional lower layer (6; 8) is attached to the depressions (12) of the corrugated layer (10).

3. Web-like element according to one or several of the preceding claims, characterised in that an intermediate web (133-135) positioned between two adjacent webs (16-19; 20-24) arranged spaced apart perpendicular to the longitudinal axis or the longitudinal ribs (37) is arranged off-set in height in the direction of the lower layer (6; 8).

4. Web-like element according to claim 2, characterised in that the lower layer (6; 8) is formed from at least several strip-like webs (16-19; 20-24; 36; 66-69; 88-90) with a rectangular cross section, which run parallel to one another on the depressions (12) with their flat sides in a common plane and are arranged at right angles to the longitudinal axis or the longitudinal ribs (9, 37) with equal spacing.

5. Web-like element according to one or several of the preceding claims, characterised in that the webs (16-19; 20-24; 36; 66-69; 88-90) of the upper and lower layer (5, 7; 6, 8) are off-set by a half spacing between the longitudinal axes of the webs (16-19; 20-24; 36; 66-69; 88-90) at right angles to the longitudinal axes of the webs (16-19; 20-24; 36; 66-69; 88-90).

6. Web-like element according to one or several of the preceding claims, characterised in that the longitudinal side edges of the webs (16-19; 20-24; 36; 66-69; 88-90) are immediately adjacent to one another.

7. Web-like element according to one or several of the preceding claims, characterised in that a web width (25) at right angles to the longitudinal direction of the longitudinal ribs (9) or the elevations (11) or depressions (12) is smaller than a spacing (14) between the longitudinal ribs and elevations (11) or depressions (12).

8. Web-like element according to one or several of the preceding claims, characterised in that on the side of the longitudinal ribs (9) or longitudinal webs facing away from the upper layer (5; 7) an intermediate layer (65) formed by a continuous layer is arranged, and in that on the bearing surface of this intermediate layer (65) averted from the longitudinal ribs (9) or the depressions (12) of the corrugated layer (10) a corrugated layer (10) or longitudinal ribs (9) are also arranged.

9. Web-like element according to claim 8, characterised in that the longitudinal ribs (9) or the corrugated layers (10) arranged on the two bearing surfaces of the intermediate layer (65) are arranged offset by a half spacing (14) relative to the spacing (14) between the longitudinal ribs (9) or the corrugated layer (10) assigned to the upper layer (5; 7).

10. Web-like element according to one or several of the preceding claims, characterised in that the lower layer (6; 8) is formed by a continuous layer made of cardboard and/or paper and/or plastic.

11. Web-like element according to one or several of the preceding claims, characterised in that one of the layers (5, 7; 6, 8) in particular the lower layer (6; 8) is made of a continuous flat bend-resistant panel made e.g. of wood, hard fibre, sheet metal or the like.

12. Web-like element according to one or several of the preceding claims, characterised in that the spacing (14) between the longitudinal ribs (9) or elevations (11) and/or depressions (12) of the corrugated layer (10) is different in size on the opposite bearing surfaces of the intermediate layer (65).

13. Web-like element according to one or several of the preceding claims, characterised in that the longitudinal direction of the longitudinal ribs (9) and/or the elevations (11) and depressions (12) run perpendicular to one another on the two bearing surfaces of the intermediate layer (65).

14. Web-like element according to one or several of the preceding claims, characterised in that several corrugated layers (10) are secured in the longitudinal direction of the elevations (11) and depressions (12) or the longitudinal ribs (9) at a distance (43) behind one another on a continuous layer of the lower layer (6; 8) or an intermediate layer (65), and in that web parts (39-42; 46-48) project on the individual longitudinal ribs (9) or elevations (11) or depressions (12) at right angles to the longitudinal direction of the elevations (11) and depressions (12) and if necessary in longitudinal direction.

15. Web-like element according to one or several of the preceding claims, characterised in that two longitudinal ribs (9) or corrugated layers (10) arranged in the longitudinal direction of the longitudinal ribs (9) or elevations (11) or depressions (12) of the corrugated layer (10) are separated from one another by cross channels.

16. Web-like element according to one or several of the preceding claims, characterised in that a distance (43) corresponding to a width of the cross channels is equal to or greater than the length (44) or the web width (25) of the web parts (39-42; 46-48).

17. Web-like element according to one or several of the preceding claims, characterised in that the longitudinal side edges of the webs (16-19; 20-24; 36; 66-69; 88-90) in the longitudinal direction of the longitudinal ribs (9) or elevations (11) or depressions (12) are conical or arrow-shaped relative to one another.

18. Web-like element according to one or several of the preceding claims, characterised in that the longitudinal side edges of the webs (16-19; 20-24; 36; 66-69; 88-90) are provided with projecting locking noses (61) or teeth whereby preferably a flange of the teeth is aligned perpendicular to the longitudinal axis of the longitudinal ribs (9) or elevations (11) or depressions (12).

19. Web-like element according to one or several of the preceding claims, characterised in that a cross sectional shape of the webs (16-19; 20-24; 36; 66-69; 88-90) is C-shaped perpendicular to the longitudinal direction of the longitudinal ribs (9) or the corrugated layer (10).

20. Web-like element made of corrugated cardboard with corrugated layer made of paper or cardboard and an upper layer made of paper or cardboard secured by a layer of glue onto the elevations of the corrugated layer and a lower layer or intermediate layer made of paper or cardboard also secured by a layer of glue onto the depressions of the corrugated layer opposite said elevations, characterised in that at least the upper layer (5, 7) is cut in the region of the depressions (12) lying between the elevations (11), or the upper layer (5, 7) is formed by webs (16-19; 20-24; 36; 66-69; 88-90) on the elevations (11) running in their longitudinal direction, which are arranged spaced apart from one another at right angles to their longitudinal direction.

21. Web-like element according to claim 20, characterised in that the webs (16-19; 20-24; 36; 66-69; 88-90) are permanently deformed convexly, in particular to have a C-shaped cross section by the influence of temperature and/or pressure and/or moisture.

22. Connecting arrangement between two web-like elements (2, 3) with respectively several longitudinal ribs (9, 37) extending in longitudinal direction, whereby on elevations (11) thereof at least several rectangular, strip-like webs (16-19; 20-24; 36; 66-69; 88-90) or web parts (39-42; 46-48) of an upper layer (5; 7) are arranged with their flat sides in a common plane, and the latter project on both sides respectively over the longitudinal ribs (9, 37) at right angles to their longitudinal extension and two immediately adjacent webs (16-19; 20-24; 36; 66-69; 88-90) or web parts (39-42; 46-48) at right angles to their longitudinal extension are spaced apart from one another and arranged with equal spacing (14) from one another, characterised in that with the first and/or second web-like element (2, 3) the longitudinal ribs (9, 37) in cross section are inclined towards the upper layer (5, 7) and to one another and form a corrugated layer (10) with elevations (11) and depressions (12), and in that on two longitudinal ribs (9; 37) forming the corrugated layer (10) a strip-like web (16-19; 20-24; 36; 66-69; 88-90) or web part (39-42; 46-48) is arranged and the webs (16-19; 20-24; 36; 66-69; 88-90) or web parts (39-42; 46-48) are secured onto the elevations (11) of the corrugated layer (10) in connecting regions (13) and the elevations (11) and depressions (12) are arranged spaced apart from one another in height (15), and in that the projection projecting over the connecting region (13) forms a linking part of the connecting arrangement (1), whereby the linking parts of the first element (2) engage behind the linking parts of the additional element (3) on the side facing the lower layer (8; 6) or the intermediate layer (65) or the corrugated layer (10).

23. Connecting arrangement according to claim 22, characterised in that the longitudinal axes of the webs (16-19; 20-24; 36; 66-69; 88-90) of the upper and the lower layer (5, 7; 6, 8) are arranged offset by a half spacing (14) relative to one another perpendicular to their longitudinal extension.

24. Connecting arrangement according to claim 22 or 23, characterised in the projections of the webs (16-19; 20-24; 36; 66-69; 88-90) or web parts (39-42; 46-48) are designed to be elastically deformable in perpendicular direction to the layer forming them.

25. Connecting arrangement according to one or several of the preceding claims characterised in that element (3) is made out of plastic or wood in particular a plastic foam or Styropor and to mount the webs (16-19; 20-24; 36; 66-69; 88-90) or web parts (39-42; 46-48) is provided with grooved recesses (49) arranged in the same spacing (14) extending parallel to the longitudinal direction of the longitudinal webs or longitudinal ribs (9, 37).

26. Connecting arrangement according to claim 25, characterised in that that the recess (49) in plastic or plastic foam or Styropor is U- or C-shaped in a plane running perpendicular to the longitudinal direction thereof, and in that a width (50) of the recesses (49) is equal to or preferably smaller than the web width (25) of the webs (16-19; 20-24; 36; 66-69; 88-90) or web parts (39-42; 46-48).

27. Connecting arrangement according to one or several of the preceding claims, characterised in that the webs (16-19; 20-24; 36; 66-69; 88-90) and/or web parts (39-42; 46-48) are planar, or deformed concavely relative to the longitudinal ribs (9, 37) or the corrugated layer (10).

28. Method for producing a web-like element in which a layer of plastic or paper, in particular cardboard, is applied onto a corrugated layer or parallel longitudinal ribs arranged on a lower layer and is glued thereon by an adhesive, and in that once the glue has set at least the upper layer is cut or partly removed in the direction parallel to the longitudinal axis of the longitudinal ribs or the elevations and/or depressions and between said longitudinal ribs or elevations or depressions, so that the facing longitudinal side edges of the webs or web parts are separated from one another and spaced apart.

## Revendications

1. Elément en forme de bande (2; 3) avec plusieurs nervures longitudinales (9) s'étendant dans la direction longitudinale, et à des surélévations (11) de celles-ci étant disposées au moins plusieurs barrettes rectangulaires en forme de bande (16-19; 20-24; 36; 66-69; 88-90) d'une couche supérieure (5; 7) avec leurs côtés plats dans un plan et où celles-ci font saillie respectivement des deux côtés sur les nervures longitudinales (9) transversalement à l'extension longitudinale de celles-ci et où deux barrettes directement avoisinantes (16-19; 20-24; 36; 66-69; 88-90) sont disposées à une certaine distance les unes des autres transversalement à leur extension longitudinale et selon une division notamment égale (14), caractérisé en ce que les nervures longitudinales (9) sont disposées suivant une inclinaison en section transversale relativement à la couche supérieure (5; 7) et les unes relativement aux autres et forment une couche ondulée (10) avec des surélévations (11) et des creux (12) et en ce qu'il est disposé respectivement sur deux nervures longitudinales (9) formant la couche ondulée (10) respectivement une barrette en forme de bande (16-19; 20-24; 36; 66-69; 88-90) et en ce que les barrettes (16-19; 20-24; 36; 66-69; 88-90) sont fixées aux surélévations (11) de la couche ondulée (10) dans des zones de liaison (13) et les surélévations (11) et les creux (12) sont espacés les uns des autres dans une hauteur de construction (15).

2. Elément en forme de bande selon la revendication 1, caractérisé en ce qu'il est fixé sur les creux (12) de la couche ondulée (10) une couche inférieure supplémentaire (6; 8).

3. Elément en forme de bande selon l'une ou plusieurs des revendications précédentes, caractérisé en ce qu'une barrette intermédiaire (133-135) subsistant entre deux barrettes (16-19; 20-24) disposées au voisinage l'une de l'autre, cependant espacées l'une de l'autre transversalement à l'axe longitudinal respectivement aux nervures longitudinales (9) est disposée suivant un décalage en hauteur en direction de la couche inférieure (6; 8).

4. Elément en forme de bande selon la revendication 2, caractérisé en ce que la couche inférieure (6; 8) est formée par au moins plusieurs barrettes en forme de bande (16-19; 20-24; 36; 66-69; 88-90) d'une section transversale rectangulaire qui s'étendent respectivement parallèlement les unes aux autres sur les creux (12), qui sont disposées avec leurs côtés plats dans un plan commun et selon une division égale transversalement à l'axe longitudinal ou aux nervures longitudinales (9; 37).

5. Elément en forme de bande selon l'une ou plusieurs des revendications précédentes, caractérisé en ce que les barrettes (16-19; 20-24; 36; 66-69; 88-90) des couches supérieure et inférieure (5, 7; 6, 8) sont décalées d'une demi-division entre les axes longitudinaux des barrettes (16-19; 20-24; 36; 66-69; 88-90), transversalement aux axes longitudinaux des barrettes (16-19; 20-24; 36; 66-69; 88-90).

6. Elément en forme de bande selon l'une ou plusieurs des revendications précédentes, caractérisé en ce que les arrêtes latérales longitudinales des barrettes (16-19; 20-24; 36; 66-69; 88-90) sont directement avoisinantes.

7. Elément en forme de bande selon l'une ou plusieurs des revendications précédentes, caractérisé en ce qu'une largeur de barrette (25) transversalement à la direction longitudinale des nervures longitudinales (9) respectivement des surélévations (11) ou des creux (12) est plus petite qu'une division (14) entre les nervures longitudinales respectivement les surélévations (11) ou les creux (12).

8. Elément en forme de bande selon l'une ou plusieurs des revendications précédentes, caractérisé en ce qu'il est disposé sur le côté éloigné de la couche supérieure (5; 7) des nervures longitudinales (9) respectivement des barrettes longitudinales une couche intermédiaire (65) formée par une couche continue et en ce que sont disposées sur la surface d'appui de cette couche intermédiaire (65) éloignée des nervures longitudinales (9) respectivement des creux (12) de la couche ondulée (10) également une couche ondulée (10) ou des nervures longitudinales (9).

9. Elément en forme de bande selon la revendication 8, caractérisé en ce que les nervures longitudinales (9) respectivement les couches ondulées (10) disposées sur les deux surfaces d'appui de la couche intermédiaire (65) sont décalées d'une demi-division (14) relativement à la division (14) entre les nervures longitudinales (9) respectivement la couche ondulée (10) associées à la couche supérieure (5; 7).

10. Elément en forme de bande selon l'une ou plusieurs des revendications précédentes, caractérisé en ce que la couche inférieure (6; 8) est formée par une couche continue en carton et/ou papier et/ou matière synthétique.

11. Elément en forme de bande selon l'une ou plusieurs des revendications précédentes, caractérisé en ce que l'une des couches (5, 6; 6, 8), notamment la couche inférieure (6; 8), est constituée d'une plaque continue plane résistant au flambage, par exemple en bois, fibres dures, tôle ou analogues.

12. Elément en forme de bande selon l'une ou plusieurs des revendications précédentes, caractérisé en ce que la division (14) entre les nervures longitudinales (9) respectivement les surélévations (11) et/ou les creux (12) de la couche ondulée (10) sur les surfaces d'appui opposées de la couche intermédiaire (65) est d'une grandeur différente.

13. Elément en forme de bande selon l'une ou plusieurs des revendications précédentes, caractérisé en ce que la direction longitudinale des nervures longitudinales (9) et/ou des surélévations (11) respectivement des creux (12) sur les deux surfaces d'appui de la couche intermédiaire (65) s'étendent perpendiculairement l'une à l'autre.

14. Elément en forme de bande selon l'une ou plusieurs des revendications précédentes, caractérisé en ce que plusieurs couches ondulées (10) sont fixées dans la direction longitudinale des surélévations (11) respectivement des creux (12) ou des nervures longitudinales (9) à une distance (43) les unes derrière les autres sur une couche continue de la couche inférieure (6; 8) ou une couche intermédiaire (65), et en ce que des parties de barrettes (39-42; 46-48) sur les différentes nervures longitudinales (9) respectivement surélévations (11) ou creux (12) font saillie transversalement à la direction longitudinale des surélévations (11) respectivement des creux (12) et le cas échéant dans la direction longitudinale.

15. Elément en forme de bande selon l'une ou plusieurs des revendications précédentes, caractérisé en ce que deux nervures longitudinales (9) respectivement couches ondulées (10) disposées l'une derrière l'autre dans la direction longitudinale des nervures longitudinales (9) respectivement des surélévations (11) ou des creux (12) de la couche ondulée (10) sont séparées par des canaux transversaux.

16. Elément en forme de bande selon l'une ou plusieurs des revendications précédentes, caractérisé en ce qu'une distance (43) correspondant à une largeur des canaux transversaux est identique à ou plus grande que la longueur (44) ou la largeur de barrette (25) des parties de barrette (39-42; 46-48).

17. Elément en forme de bande selon l'une ou plusieurs des revendications précédentes, caractérisé en ce que les arêtes latérales longitudinales des barrettes (16-19; 20-24; 36; 66-69; 88-90) s'étendent les unes aux autres dans la direction longitudinale des nervures longitudinales (9) respectivement des surélévations (11) ou des creux (12) en forme de cône respectivement de flèche.

18. Elément en forme de bande selon l'une ou plusieurs des revendications précédentes, caractérisé en ce que les arêtes latérales longitudinales des barrettes (16-19; 20-24; 36; 66-69; 88-90) sont pourvues d'ergots d'enclenchement (61) saillants ou de dentures, de préférence un flanc de la denture étant orienté perpendiculairement à l'axe longitudinal des nervures longitudinales (9) respectivement des surélévations (11) ou des creux (12).

19. Elément en forme de bande selon l'une ou plusieurs des revendications précédentes, caractérisé en ce qu'une forme en section transversale des barrettes (16-19; 20-24; 36; 66-69; 88-90) est en forme de C perpendiculairement à la direction longitudinale des nervures longitudinales (9) ou de la couche ondulée (10).

20. Elément en forme de bande en carton ondulé avec une couche ondulée en papier ou en carton et une couche supérieure en papier ou en carton fixée sur les surélévations de la couche ondulée par une couche de colle et une couche inférieure ou couche intermédiaire en papier ou en carton fixée sur les creux de la couche ondulée opposés à ces surélévations également par une couche de colle, caractérisé en ce qu'au moins la couche supérieure (5, 7) est séparée au voisinage des creux (12) situés entre les surélévations (11), ou la couche supérieure (5, 7) est formée par des barrettes (16-19; 20-24; 36; 66-69; 88-90) s'étendant sur les surélévations (11) dans la direction longitudinale de celles-ci qui sont disposées transversalement à la direction longitudinale de celles-ci à une certaine distance les unes des autres.

21. Elément en forme de bande selon la revendication 20, caractérisé en ce que les barrettes (16-19; 20-24; 36; 66-69; 88-90) sont déformées d'une manière convexe, notamment en une section transversale constante en forme de C, sous l'effet de la température et/ou la pression et/ou l'humidité.

22. Dispositif de liaison entre deux éléments en forme de bande (2, 3) avec respectivement plusieurs nervures longitudinales (9, 37) s'étendant dans la direction longitudinale, où à des surélévations (11) de celles-ci sont disposées au moins plusieurs barrettes rectangulaires en forme de bande (16-19; 20-24; 36; 66-69; 88-90) respectivement des parties de barrette (39-42; 46-48) d'une couche supérieure (5; 7) avec leurs côtés plats dans un plan et celles-ci font saillie respectivement des deux côtés sur les nervures longitudinales (9, 37) transversalement à leur extension longitudinale et où deux barrettes directement avoisinantes (16-19; 20-24; 36; 66-69; 88-90) respectivement parties de barrette (39-42; 46-48) sont disposées transversalement à l'extension longitudinale de celles-ci à une certaine distance les unes des autres ainsi que notamment selon la même division (14), caractérisé en ce que dans le premier et/ou deuxième élément en forme de bande (2, 3) les nervures longitudinales (9, 37) sont disposées suivant une inclinaison en section transversale à la couche supérieure (5, 7) et les unes aux autres et forment une couche ondulée (10) avec des surélévations (11) et des creux (12) et en ce qu'il est disposé sur respectivement deux nervures longitudinales (9; 37) formant la couche ondulée (10) respectivement une barrette en forme de bande (16-19; 20-24; 36; 66-69; 88-90) respectivement partie de barrette (39-42; 46-48) et que les barrettes (16-19; 20-24; 36; 66-69; 88-90) respectivement parties de barrette (39-42; 46-48) sont fixées aux surélévations (11) de la couche ondulée (10) dans des zones de liaison (13) et que les surélévations (11) et les creux (12) sont disposés à une certaine distance les uns des autres dans une hauteur de construction (15) et en ce que la saillie dépassant la zone de liaison (13) forme une partie d'accouplement du dispositif de liaison (1), les parties d'accouplement du premier élément (2) passant derrière les parties d'accouplement de l'élément supplémentaire (3) au côté orienté vers la couche inférieure (8; 6) respectivement la couche intermédiaire (65) ou la couche ondulée (10).

23. Dispositif de liaison selon la revendication 22, caractérisé en ce que les axes longitudinaux des barrettes (16-19; 20-24; 36; 66-69; 88-90) des couches supérieure et inférieure (5, 7; 6, 8) sont décalés d'une demi-division (14) les uns aux autres transversalement à leur extension longitudinale.

24. Dispositif de liaison selon la revendication 22 ou 23, caractérisé en ce que les saillies des barrettes (16-19; 20-24; 36; 66-69; 88-90) respectivement parties de barrette (39-42; 46-48) sont réalisées de manière déformable élastiquement dans la direction perpendiculaire à la couche formée.

25. Dispositif de liaison selon l'une ou plusieurs des revendications précédentes, caractérisé en ce qu'un élément (3) est formé par une matière synthétique ou du bois, notamment une mousse de matière synthétique ou du Styropor et est pourvu pour recevoir les barrettes (16-19; 20-24; 36; 66-69; 88-90) respectivement les parties de barrette (39-42; 46-48) d'évidements (49) disposés selon la même division (14), en forme de rainure, s'étendant parallèlement à la direction longitudinale des barrettes longitudinales respectivement nervures longitudinales (9, 37).

26. Dispositif de liaison selon la revendication 25, caractérisé en ce que les évidements (49) dans la matière synthétique respectivement la mousse de matière synthétique ou dans le Styropor sont en forme de U ou de C dans un plan s étendant perpendiculairement à la direction longitudinale de ceux-ci, et en ce qu'une largeur (50) des évidements (49) est identique ou de préférence plus petite que la largeur de barrette (25) des barrettes (16-19; 20-24; 36; 66-69; 88-90) respectivement des parties de barrette (39-42; 46-48).

27. Dispositif de liaison selon l'une ou plusieurs des revendications précédentes, caractérisé en ce que les barrettes (16-19; 20-24; 36; 66-69; 88-90) et/ou les parties de barrette (39-42; 46-48) sont réalisées en une surface plane ou sont déformées d'une manière concave relativement aux nervures longitudinales (9, 37) respectivement la couche ondulée (10).

28. Procédé de fabrication d'un élément en forme de bande, où sont appliqués sur des nervures longitudinales s'étendant parallèlement les unes aux autres disposés sur une couche ondulée ou une couche inférieure, une couche en matière synthétique ou en papier, notamment en carton et sont reliées par une colle, et en ce qu'après le durcisssement de la colle, au moins la couche supérieure, dans la direction parallèle à l'axe longitudinal des nervures longitudinales respectivement des surélévations et/ou des creux et entre ces nervures longitudinales respectivement surélévations respectivement creux est séparée ou partiellement enlevée de telle sorte que les arêtes longitudinales latérales orientées les unes vers les autres des barrettes respectivement parties de barrette sont séparées et espacées les unes des autres.
